Europäisches Patentamt

(19) European Patent Office

Office européen des brevets

(11) EP 0 878 681 A2

(12) **EUROPEAN PATENT APPLICATION**

(43) Date of publication:
18.11.1998 Bulletin 1998/47

(51) Int. Cl.$^6$: **F27B 9/40**, F27D 19/00

(21) Application number: 98107653.2

(22) Date of filing: 27.04.1998

(84) Designated Contracting States:
AT BE CH CY DE DK ES FI FR GB GR IE IT LI LU
MC NL PT SE
Designated Extension States:
AL LT LV MK RO SI

(30) Priority: 25.04.1997 JP 108620/97

(71) Applicants:
• NIPPON FURNACE KOGYO KAISHA LTD.
Tsurumi-ku, Yokohama-shi, Kanagawa-ken 230
(JP)

• INAX CORPORATION
Tokoname-Shi, Aichi 479 (JP)

(72) Inventors:
• Yasuda, Tsutomu
Tokyo (JP)
• Hamada, Yoichiro
Tokoname-shi, Aichi-ken (JP)

(74) Representative:
DIEHL GLAESER HILTL & PARTNER
Flüggenstrasse 13
80639 München (DE)

(54) **Firing control apparatus and firing control method**

(57) The roller hearth kiln RH is equipped with a high temperature air flow generator 1 for controlling a temperature profile in a kiln RH; a reducing combustion gas generator 2 for feeding a hot combustion gas flow of reduction atmosphere to the kiln; and a combustion flue gas treatment apparatus 3 for treating combustion flue gas of the kiln containing unburnt matters (CO, $H_2$). The generators 1, 2 and treatment apparatus 3 are provided with an air flow passage CA for introducing ambient air; an exhaust gas passage EA for exhausting a combustion exhaust gas produced in combustion areas 13, 14; a passage of a hot air, regulated gas or flue gas flow HA, HB, HC connected to the kiln; changeover means 21 connected to the flow passages CA and EA; first and second heat-exchangers 11, 12 and the first and second combustion areas 13, 14 selectively communicated with the flow passage CA or EA; and a splitting or junction area 15 functioning as splitting means or joining means for dividing or receiving the hot air, regulated gas or flue gas flow through the passage HA, HB, HC.

**FIG.4**

(A)

EP 0 878 681 A2

## Description

The present invention relates to a firing control apparatus and firing control method.

A variety of kilns are industrially used for firing or burning ceramic materials to produce various kinds of ceramic materials, e.g., architectural interior or exterior ceramic tiles, in accordance with a predetermined process for firing the raw or unfired ceramic materials. Kilns of continuous firing type, such as a tunnel kiln (TK) or a roller hearth kiln (RH), and kilns of one batch treatment type, such as a single-chamber cellar kiln or shuttle kiln are typically exemplified.

In those kinds of kilns, a firing pattern, temperature profile and internal atmosphere conditions are predetermined to be adequate to the ceramic materials to be fired. In general, a typical firing pattern for a kiln generally includes a temperature rising region in which the ceramic materials are heated or fired while a furnace temperature gradually rises up to a maximum temperature range around 1,200°C~1,300°C , and a temperature falling region in which the materials fired and heated to the maximum temperature range is gradually cooled by natural or mechanical draft cooling. The unfired ceramic materials are fired by a reduction firing and/or an oxidation firing in the temperature rising region, and they develop a desired color and pattern mainly in the temperature falling region. Colors, patterns and properties of the ceramic materials are considerably effected by the temperature condition and the firing atmosphere in the kiln as well as the cooling temperature profile or characteristics in the temperature falling region. Therefore, these kinds of kilns require a relatively strict control of temperature profile and internal firing atmosphere, whereby a desired firing pattern appropriate for the purpose of production can be ensured and an intended firing conditions throughout the firing process can be obtained. Especially, as the control of firing temperature, cooling temperature, oxygen density, carbon monoxide density and the like significantly effects the colors, properties and qualities of the ceramic products, controllability of the kiln on the temperature profile and the internal atmosphere is deemed to be important in operation and maintenance of production facilities.

Further, the kilns are generally so arranged that various kinds of firing atmospheres in the firing zones are provided in the kiln to develop desired colors and patterns on the ceramic products. Such atmospheres are effected by various kinds of firing mode, e.g., oxidation-firing, weak oxidation-firing, neutral-firing, weak reduction firing, deoxidation-firing, reduction firing or deoxidation-firing. Chemical reactions in the ceramic materials are controlled in dependence on adjustment of air ratio or oxygen density of combustion air involved in combustion reaction, and therefore, the control of firing atmosphere is mainly performed by controlling air supply and fuel supply to firing system. For example, a reduction-firing atmosphere with a reducing flame is generated under less oxygen condition in which incomplete combustion occurs for a lack of oxygen while the air ratio of oxygen density are limited by insufficient supply of air, and a relatively large quantity of carbon monoxide are produced in the kiln. On the other hand, an oxidation-firing atmosphere with an oxidizing flame is generated under the existence of sufficient oxygen in which the air ratio is increased by sufficient supply of air exceeding the stoichiometric ratio. In general, such firing conditions are regulated and maintained in accordance with a predetermined heat-curve so as to promote desirable chemical reactions in the ceramic materials, whereby ceramic products with desired tone of color, luster and property can be mass-produced.

In this technical field, color, tone, luster and pattern of respective final ceramic products are considered to be especially important for product evaluation. The color and pattern is deemed to be factors dependent on chemical reactions of metal components contained in the ceramic material or clay, such as iron, copper or the like, and therefore, an inherent color or tone is developed on the final products correspondingly to the metal components as well as the nature of flame. For instance, when a raw or unfired material of ceramic tiles is reduction-fired, ferric oxide $Fe_2O_3$ is converted to FeO or $Fe_3O_4$ in the firing process. $Fe_2O_3$, FeO and $Fe_3O_4$ mainly promote development of red color, white color and black color on the ceramic product, respectively.

Generally, in a case where a material of ceramic tiles contains a relatively small quantity of $Fe_2O_3$, it can be understood that the following chemical reaction is caused upon reduction-firing in a high temperature range above 1,100 °C:

$$Fe_2O_3 \xrightarrow{CO} 2FeO + 1/2\ O_2$$

Therefore, $Fe_2O_3$ is converted to FeO in a reduction-firing atmosphere, so that the ceramic tile can be whitened.

On the other hand, when the material of ceramic tiles contains a relatively large quantity of $Fe_2O_3$, it can be understood that the following chemical reaction occurs upon reduction-firing in a high temperature range above 1,100 °C:

$$3\ Fe_2O_3 \xrightarrow{CO} 2Fe_3O_4 + 1/2\ O_2$$

Thus, $FeO_3$ is converted to $Fe_3O_4$ in a reduction-firing atmosphere, and therefore, black color is relatively significantly developed on the ceramic tile. The equilibrium of $Fe^{2+} \leftrightarrow Fe^{3+}$ in the above chemical reactions is affected by the components of glaze and the quantity of Fe as well as the firing temperature and the firing atmosphere. In particular, Fe tends to be considerably affected by differences or changes of firing atmosphere, and the quality of ceramic products may be substantially concerned with the starting temperature of the reduction-firing steps, rather than the density of reducing gas. Thus, in the technique of firing ceramic tiles, strict control of the temperature profile and the firing gas property, especially, strict control of the oxygen density and the carbon monoxide density is required, and the stringent maintenance of the firing temperature and atmosphere is needed.

A roller hearth kiln used for firing ceramic tiles or the like generally comprises preheat zone, firing zone and cooling zone aligned in its longitudinal direction. Unfired materials of the ceramic tiles are successively transferred through these zones by a roller conveyor and delivered therefrom as ceramic tile products. The firing zone for heating the ceramic materials up to the maximum temperature range includes an oxidation-firing zone and/or a reduction-firing zone, and the cooling zone is adapted to cool the fired tile materials with natural and mechanical draft.

In the firing process of architectural exterior tiles, the tile products of a relatively strong red color can be obtained by slowly cooling the ceramic materials after reaching the maximum temperature range, and this kind of tile products are preferably applicable to exterior finish tiles of architectures. Development of red color on the tiles is found to be promoted by controlling the cooling condition in that the ceramic materials are slowly cooled for a predetermined time period with a relatively high density of oxygen kept in the cooling zone of a temperature ranging from 1,100°C to 900°C. However, means for controlling such a gradual slow cooling condition in a high temperature range and a rich oxygen atmosphere is not actually available, and therefore, it is necessary to practically provide an apparatus and method for arbitrarily creating such a gradual cooling atmosphere in a condition of a high temperature and a high oxygen density.

Further, the firing pattern of ceramic materials including a reduction-firing step can be arbitrarily and properly regulated by a variable control of reducing gas containing carbon monoxide. Therefore, an apparatus and method is required for practically enabling such an arbitrary control of a reduction-firing atmosphere in a kiln.

Still further, it is difficult to directly discharge a combustion flue gas of the reduction-firing zone to the ambient atmosphere because such a flue gas includes a relatively high density of carbon monoxide. Therefore, in the conventional roller hearth kiln, the combustion flue gas in the reduction-firing zone flows into an adjacent oxidation-firing zone or preheating zone in communication with the reduction-firing zone, and therefore, the unburnt matters such as carbon monoxide contained in the flue gas are to be completely burnt and then, exhausted. However, the gas flow or gas circulation between different zones may deteriorate stabilization or controllability of the zonal control and independency of the respective zones. Thus, an apparatus and method is required for enabling re-burning or after-burning of the unburnt matters contained in the combustion flue gas of the reduction-firing zone in order to render it readily dischargeable to the ambient atmosphere.

It is therefore the object of the present invention to overcome the drawbacks and disadvantages of the prior art. This object is solved by the apparatus according to independent claims 1, 5, 6 and 7 and the method according to independent claim 8. Further advantageous features, aspects and details of the invention are evident from the dependent claims, description and figures. The claims are to be understood as a first non-limiting approach for defining the invention in general terms.

According to one aspect, the present invention provides a firing control apparatus and a firing control method for enabling a stable and variable control of the temperature and/or firing condition in the kiln. More particularly, the present invention provides an apparatus and method in which firing temperature profile and internal firing atmospheres in a kiln for firing ceramic products are substantially arbitrarily controllable.

According to a further aspect, the present invention provides a firing control apparatus and a firing control method for variably controlling the temperature profile in the kiln.

According to yet a further aspect, the present invention provides a firing control apparatus and a firing control method for arbitrarily generating and maintaining various kinds of firing atmospheres in the kiln, such as a reduction-firing atmosphere, neutral-firing atmosphere or the like.

According to a still further aspect, the present invention provides a firing control apparatus and a firing control method which enables after-burning or re-burning of unburnt matters in the combustion flue gas of the kiln for readily discharging the flue gas to the ambient atmosphere.

The apparatus according to the present invention is provided for controlling a temperature and/or firing atmosphere in a kiln. The apparatus comprises first and second heat-exchangers, first and second combustion areas, communication means for allowing the first and second combustion areas to be in communication with each other, and changeover means for selectively switching a flow passage of a low temperature fluid and a flow passage of a combustion gas, the first heat-exchanger and the first combustion area being arranged in series and the second heat-exchanger and the second combustion area being arranged in series. Tile changeover means is adapted to be alternately switched to first and second positions. In the first position, the low temperature fluid flow is introduced through the first heat-exchanger into the first combustion area and the combustion exhaust gas produced in the second combustion area is exhausted through the second heat-exchanger, whereas in the second position, the low temperature fluid flow is introduced into the second heat-exchanger into the second combustion area and the combustion exhaust gas produced in the first combustion area is exhausted through the first heat-exchanger. The communication means is connected with a communication passage through which the communication means is adapted to be in communication with the kiln, and a high temperature fluid flow heated by the first heat-exchanger is introduced through the communication means into the second combustion area in the first position so that the high temperature fluid undergoes a combustion reaction therein, whereas a high temperature fluid flow heated by the second heat-exchanger is introduced through the communication means into the first combustion area in the second position so that the high temperature fluid undergoes a combustion reaction therein. Further, each of the first and second heat-exchangers is provided with a regenerator, which allows the combustion exhaust gas and the low temperature fluid flow to alternately pass therethrough, so that the regenerator accumulates the heat of the combustion exhaust gas in a heat transferable contact therewith and transmits the accumulated heat to the low temperature fluid so as to heat it.

According to the method of the present invention for controlling a temperature and/or firing atmosphere in a kiln, the method comprises the first and second heating processes. The first heating process includes steps of introducing a low temperature fluid flow through a regenerator of a first heat-exchanger at a high temperature so as to heat the low temperature fluid flow in a heat transferable contact with the regenerator, introducing the heated fluid flow at a high temperature through communication means into the second combustion area so as to undergo a combustion reaction therein, and exhausting a combustion exhaust gas produced in the second combustion area through a regenerator of a second heat-exchanger so that a sensible heat possessed by the combustion exhaust gas is accumulated in the regenerator in a heat transferable contact therebetween. Similarly, the second heating process includes steps of introducing a low temperature fluid flow through the regenerator of the second heat-exchanger at a high temperature so as to heat the low temperature fluid flow in a heat transferable contact with the regenerator, introducing the heated fluid flow at a high temperature through the communication means into the first combustion area so as to undergo a combustion reaction therein, and exhausting a combustion exhaust gas produced in the first combustion area through the regenerator of the first heat-exchanger so that a sensible heat possessed by the combustion exhaust gas is accumulated in the regenerator in a heat transferable contact therebetween. The communication means is in communication with a predetermined area of the kiln through a communication passage. The first and second processes thus arranged are alternately performed in a predetermined time interval so as to continuously heat the low temperature fluid flow.

The high temperature fluid flow heated by the heat-exchanger is fed to the kiln through the communication means, so that the fluid at a high temperature is regulated for controlling the furnace temperature and/or the firing atmosphere of the kiln; or otherwise, the combustion flue gas of the kiln is fed to the combustion area through the communication means, so that unburnt matters contained in the combustion flue gas of the kiln are substantially completely burnt in the combustion area.

From one aspect of the present invention, the communication means has a splitting area for dividing the high temperature fluid flow into first and second streams. The first stream is introduced into the second combustion area when the changeover means is in the first position and it is introduced into the first combustion area when the changeover means is in the second position. Each of the combustion areas is provided with fuel supply means for feeding a combustion fuel to the first stream. The high temperature fluid flow of the second stream is introduced into the communication passage to be delivered to a predetermined area in the kiln so as to control the temperature therein.

In such an apparatus and method, the first and second heat exchanger can heat the low temperature fluid, with the composition of the fluid remaining unchanged. Therefore, the high temperature air flow to be delivered to the kiln can keep substantially the same components as the low temperature fluid. For example, a cold air flow having a high oxygen density can be heated to be a high temperature air flow, which is delivered to the cooling zone of the kiln and which acts to control the temperature gradient, furnace temperature or firing atmosphere of the cooling zone with the hot air flow having a relatively high oxygen density.

From another aspect of the present invention, each of the first and second combustion area is provided with fuel supply means for feeding a fuel to the high temperature fluid flow effluent from the heat-exchanger. The fuel and the heated fluid flow generate a reducing or neutral flame in the combustion area, whereby the heated fluid flow is reformed to a reducing or neutral combustion gas flow at a high temperature. The reducing or neutral flame is alternately produced in the first and second combustion area with a fuel fed into the first and second combustion areas in the first and second processes. The combustion gas flow of a reduction or neutral atmosphere alternately produced in the first and second combustion areas is divided into first and second streams, so that the second stream is delivered to a predetermined zone of the kiln and the first stream is introduced into the opposite combustion area to take a re-combustion reaction therein. That is, the first stream is introduced into the second combustion area to take a reburning action therein when the changeover means is in the first position and it is introduced into the first combustion area to take a reburning action therein when the changeover means is in the second position. The hot reducing or neutral gas flow of the second stream is introduced through the communication passage to a predetermined area in the kiln so as to control the firing atmosphere therein. The re-burnt exhaust gas produced in the combustion area is exhausted through the regenerator of the corresponding heat-exchanger.

According to such an arrangement, the apparatus and method is applicable to a specific firing gas generator and a specific firing gas generating method for producing a reformed gas of a reduction firing or neutral firing atmosphere, which are capable of providing a variable control of firing condition in the kiln.

From still another aspect of the present invention, the communication means has a junction area, which receives a combustion flue gas of the kiln through the communication passage and which allows the gas flow to join the high temperature fluid flow. The mixture flow of the combustion flue gas and high temperature fluid is alternately introduced into the first and second combustion area to take a re-burning action therein. The unburnt matters contained in the combustion flue gas are burnt in the first or second combustion area. Thus, the combustion flue gas of the kiln is joined with the high temperature fluid flow heated by the first or second heat-exchanger, and the mixed flow of the flue gas and the high temperature fluid is introduced into one of the combustion areas so as to undergo a combustion reaction of unburnt matters contained in the flue gas, thereby ensuring a substantially complete combustion of the unburnt matters. The combustion exhaust gas produced in the combustion area is introduced into the second heat-exchanger and exhausted therethrough.

With such an arrangement, the unburnt matters contained in the combustion flue gas of the kiln is substantially completely burnt by the re-burning action or after-burning action in the first and second combustion areas, so that the combustion flue gas can be readily discharged to the ambient atmosphere. Therefore, the apparatus and method are applicable to an exhaust gas treatment of the combustion flue gas to be discharged from the kiln.

According to a preferred embodiment, the communication means includes a flow passage in communication with the first and second combustion area, an opening in communication with the kiln through the communication passage, and a restriction or protrusion in the flow passage which is disposed in opposition to the opening. The restriction or protrusion functions as an orifice for regulating or limiting the dynamic fluid pressure of the high temperature fluid and acts as a deflector for controlling the direction of the split stream or joined stream.

Preferably, the heat-exchanger is constituted by a regenerator of a honeycomb structure having a large number of narrow fluid passages, through which the low temperature fluid and the high temperature fluid are alternately passed. Preferably, the time interval or switching cycle time of the changeover means is set to be a predetermined time no greater than 60 seconds, more preferably, no greater than 30 seconds. Each of the regenerators repeatedly performs a heat accumulation and a heat emission in accord with the preset switching cycle time. In a preferred embodiment, the low temperature fluid is a normal temperature air of ambient atmosphere, and the fluid is heated by the regenerator of the heat-exchanger up to the temperature range above 800 °C, more preferably, the temperature above 1,000°C.

In a preferred embodiment, the kiln is provided with the firing control apparatus for controlling a firing atmosphere and the exhaust gas treatment apparatus for controlling a combustion flue gas according to the present invention, and the exhaust gas exhausted from the exhaust gas treatment apparatus is at least partially introduced into the combustion area of the firing control apparatus.

In another preferred embodiment, an assist air is introduced into the combustion area of the above apparatus, in which the combustion reaction in the combustion area is energized or urged by the assist air.

According to a preferred application of the present invention, the above apparatus is equipped for a cooling zone of a roller hearth kiln so as to function as a high temperature air generator for controlling the cooling temperature gradient therein. According to another preferred application of the present invention, the above apparatus is equipped for the firing zone of the roller hearth kiln so as to function as a reducing gas generator for controlling the reducing firing atmosphere in the kiln and/or a combustion flue gas treatment device for re-burning the combustion flue gas of the reduction firing zone.

According to another application of the present invention, the above apparatus is equipped for a kiln of a batch treatment type, such as a single-chamber cellar kiln or a shuttle kiln. The firing atmosphere in the kiln can be variably and timely controlled by the apparatus of the present invention to generate various kinds of steps, such as a preheating step, a firing step, a cooling step and the like in accordance with a predetermined firing pattern. Preferably, a combustion flue gas treatment apparatus according to the present invention is further equipped on such a kiln for readily exhausting combustion flue gas.

In another preferred embodiment, the above apparatus is used as a specific local firing device for blasting or blowing a high temperature gas of a specific firing atmosphere into the kiln. Such a device directs a high temperature firing gas toward a predetermined part or spot of ceramic material to be fired, which gas is of a specific atmosphere different from the general atmosphere of the firing zone.

FIG. 1A is are a schematic illustration showing the whole construction of a roller hearth kiln for producing ceramic tiles, which is provided with a high temperature air flow generator, a reducing combustion gas generator and a combustion flue gas treatment apparatus according to the present invention;

FIG. 1B is a diagram of a so-called heat-curve showing a temperature profile in the kiln;

FIGS. 2A and 2B are schematic vertical cross-sectional views of a preheat zone taken along lateral and longitudinal directions of the kiln;

FIGS. 3A and 3B are schematic vertical cross-sectional views of a firing zone and a cooling zone of the kiln taken along its lateral direction:

FIGS. 4A, 4B, 5A and 5B are block flow diagrams and schematic cross-sectional views of a high temperature air flow generator provided for the cooling zone;

FIGS. 6A, 6B, 7A and 7B are block flow diagrams and schematic cross-sectional views of a reducing combustion gas generator provided for a continuous reduction zone of the kiln;

FIGS. 8A, 8B, 9A and 9B are block flow diagrams and schematic cross-sectional views of a combustion flue gas treatment apparatus provided for the continuous reduction zone;

FIGS. 10A and 10B are a perspective view of a regenerator of a heat-exchanger constituting a high-cycle regenerative combustion system and a fragmentary enlarged perspective view thereof;

FIG. 11 is a schematic vertical cross-sectional view showing the whole construction of a shuttle kiln or single-chamber cellar kiln provided with a high temperature air / reducing combustion gas generator and a combustion flue gas treatment apparatus in accordance with the present invention;

FIGS. 12A, 12B, 13A and 13B are block flow diagrams and schematic cross-sectional views showing the whole construction of the generator illustrated in FIG. 11;

FIGS. 14, 15 and 16 are schematic vertical cross-sectional views of a roller hearth kiln showing variations or applications of the generator and the treatment apparatus according to the present invention.

Preferred embodiments of the present invention will be described in detail with reference to the accompanying drawings.

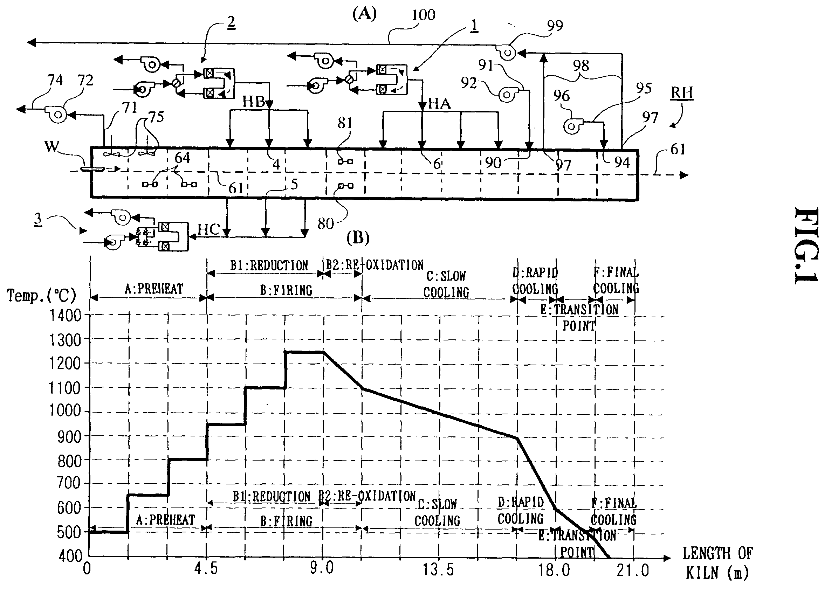

A first embodiment of the present invention is shown in FIGS. 1 through 10, wherein FIG. 1 shows a schematic illustration of the whole construction of a roller hearth kiln and a heat-curve therein, the kiln being provided with a high temperature air flow generator, a reducing combustion gas generator and a combustion flue gas treatment apparatus which constitute the apparatus for controlling the furnace temperature, firing atmosphere and combustion flue gas in accordance with the present invention.

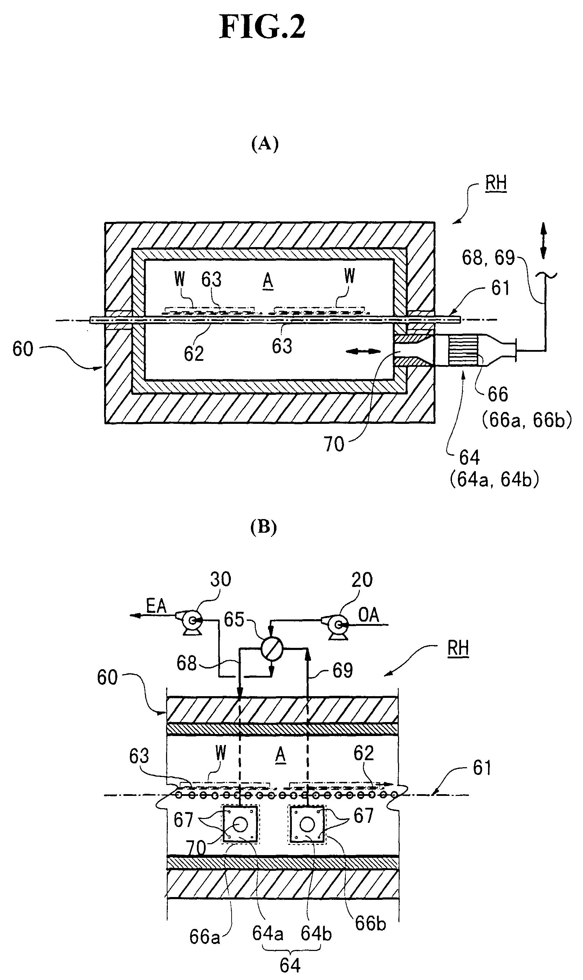

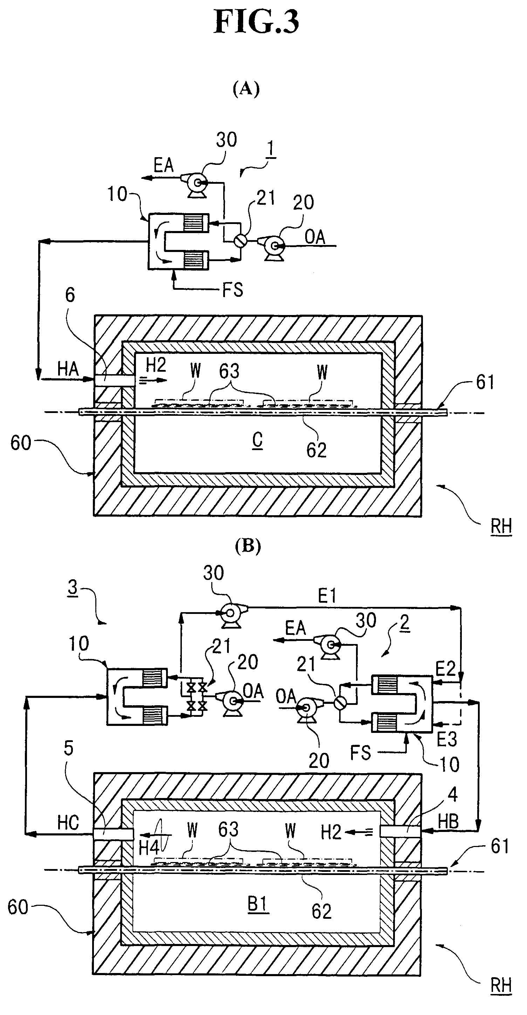

The kiln RH generally illustrated in FIG.1 (A) is constructed and controlled so as to produce ceramic tiles or clay tiles, such as architectural exterior tiles of thin-type. As shown in FIGS. 2 and 3, the roller hearth kiln RH comprises a furnace body 60 formed by refractories, thermal-resistant materials and the like, and roller type conveyor 61 arranged in the kiln. The conveyor 61 includes a plurality of ceramic or thermal-resistant steel rollers 62 extending in a widthwise direction of the furnace body 60, each roller 62 being operatively connected with rotation drive means (not shown). The rollers 62 spaced apart a slight distance from each other are arranged overall the entire length of the body 60 so as to constitute substantially continuous conveyor means for transferring raw materials to be fired in the kiln RH.

Refractory thermal-resistant trays or plates 63 loaded with a plurality of ceramic or clay tile materials W are introduced into the preheat zone A and are transferred in a lengthwise direction of the furnace body 60 with rotation movement of the driven rollers 62. The tile materials W on the tray 63 are transferred in an axial direction of the body 60 in a predetermined transfer velocity to take a series of firing steps, until they are delivered out of the kiln through a final cooling zone F and unloaded.

The internal area of the furnace body 60 is divided into a series of zones, i.e., the preheat zone A, a firing zone B, the cooling zone C, a rapid cooling zone D, a transition point zone E and the final cooling zone F, which are successively arranged in the longitudinal direction of the kiln RH and in communication with each other. The so-called heat-curve as shown in FIG. 1B is predetermined so as to be adapted for firing the tile materials W. The heat-curve includes a temperature increment region in the zones A and B in which the temperature in the kiln RH is stepwisely raised from approximately 500 °C to the maximum temperature range of approximately 1200 °C to 1300 °C ; and a temperature decrement region in the zones C and D in which the temperature therein gradually falls from the maximum temperature range down to the transition point temperature range; and a final temperature decrement region in the zones E and F in which the temperature therein lowers from the transition point temperature range to the product discharge temperature of the kiln RH. The firing atmosphere in the firing zone B and the temperature characterization in the cooling and rapid cooling zones C, D substantially affect the pattern and color to be developed on the surface layer of the tile material W. In this embodiment, the firing zone B is provided with the reduction combustion gas generator 2 and the exhaust flue gas treatment apparatus 3, which are arranged in accordance with the present invention to define the apparatus for controlling the firing atmosphere and the apparatus for controlling the combustion flue gas. Further, the cooling zone C is provided with a high temperature air flow generator 1 arranged in accordance with the present invention to define the apparatus for controlling the furnace temperature. The generator 2 and the apparatus 3 control the reduction firing atmosphere in the zone B, whereas the generator 1 controls the temperature profile and the temperature gradient in the zone C.

The furnace temperature conditions in the respective zones A through F are controlled and maintained by the heating and cooling means of the kiln RH including the generators 1, 3 and the apparatus 2 so as to present a predetermined temperature profile overall the kiln RH as seen from the heat-curve in FIG. 1B. The tile materials W on the tray 63 are transferred by the conveyor 61 through the respective regulated zones A to F, and are heated and cooled under the preset temperature conditions and firing conditions, so that desired tile products are produced.

The preheat zone A is divided into three compartments or heating sections by drop-arches or baffles (not shown), the first section receiving the tile materials W and the second and third sections preheating them. Regenerative burner systems 64 is installed below the conveyor 61 in the second and third sections. As shown in FIG. 2B, each of the burner systems 64 comprises a pair of burner units 64a, 64b spaced a predetermined distance in the transfer direction, and a changeover mechanism 65 of a four-way valve type connected with the respective burner units 64a, 64b through flow passages 68, 69. Each of the burner units 64a, 64b is provided with regenerator 66 (66a; 66b) having a honeycomb structure with a large number of narrow fluid passages, and fuel supply means 67 for injecting a hydrocarbon fuel, such as LNG or LPG, into a combustion air flow introduced through a burner throat 70. The changeover mechanism 65 is alternately switched at a predetermined time interval, which is preferably set to be no greater than 60 seconds, more preferably, no greater than 30 seconds, so as to control the introduction of the combustion air and the exhaust of the combustion flue gas through the burner units 64a, 64b.

The first burner unit 64a is fired in the first position of the changeover mechanism 65 as shown in FIG. 2B, so that the combustion flue gas produced in the zone A is exhausted through the regenerator 66b of the second burner unit 64b and discharged through a fluid passage 69, an induced draft fan 30 and an exhaust gas passage EA. The regenerator 66b is heated in a heat transfer contact with the combustion flue gas. On the other hand, the second burner unit 64b is fired in the second position of the changeover mechanism 65, so that the combustion flue gas in the zone A is exhausted through the regenerator 66a of the first burner unit 64a, the fluid passage 68, the induced draft fan 30 and the exhaust gas passage EA, whereby the regenerator 66a is heated in contact with the combustion flue gas.

In the first position of the changeover mechanism 65, ambient atmospheric combustion air is supplied to the first burner unit 64a through an air intake passage OA, the changeover mechanism 65 and the flow passage 68 under a delivery pressure of a forced draft fan 20 so as to be in a heat-transfer contact with the regenerator 66a at a high temperature. Thus, the combustion air is heated up to a high temperature range over 800°C , preferably, higher than 1,000 °C . The highly preheated combustion air flows into the zone A at an introduction flow velocity of 60 m/s ~ 100 m/s accelerated by a burner throat 70 reduced in diameter. The fuel supply means 67 feeds the hydrocarbon fuel to the combustion air flow, so that a flame is created below the coveyor 61 with a combustion reaction of the fuel. The exhaust gas produced therein is introduced through the narrow fluid passages (honeycomb passages) of the regenerator 66b under the suction pressure of the fan 30, and the sensible heat of the combustion flue gas is transmitted to the honeycomb walls thereof by a heat-exchange action therebetween and is accumulated in the regenerator 66b. The combustion flue gas thus cooled is discharged to the ambient atmosphere through the exhaust passage EA.

In a successive second position of the changeover mechanism 65, the ambient atmospheric combustion air is supplied to the first burner unit 64b through the passage OA under the pressure of the fan 20 and the combustion air is heated up to the above high temperature by the regenerator 66b, so that the high temperature and high velocity combustion air flows into the zone A. The combustion air and the fuel of the fuel supply means 67 take a combustion reaction to create a flame below the coveyor 61. The exhaust gas in the zone A is introduced into the regenerator 66a under the suction pressure of the fan 30 and is discharged to the ambient atmosphere through the exhaust passage EA. The sensible heat of the combustion flue gas is transmitted to the regenerator 66a to heat it.

Thus, the hot exhaust flue gas and cold ambient air alternately pass through the regenerator 66 of honeycomb structure in a short time interval. The combustion air flow is heated to the temperature range above 800 °C ~ 1000 °C by means of the substantially direct heat-exchange action through the regenerator 66, and introduced into the zone A, so that a combustion reaction with the hydrocarbon fuel is generated therein. Each section of the zone A is independently controlled by the burner system 64, whereby the furnace temperature presents the step-like heat-curve which is stepwisely raised as shown in FIG. 1B. Although the fuel injection nozzles and the burner throat portions are merely illustrated in FIG. 2B, the burner system 64 is provided with necessary attachments or accessories, such as pilot burners, fuel supply control valves and the like, which are, however, omitted from the drawings for the purpose of simplification of illustration.

As shown in FIG. 1A, the zone A further comprises an exhaust fan 72 which partially exhaust the combustion flue gas in the zone A. A suction port of the fan 72 is in communication with the first section of the zone A through an exhaust flow passage 71. A delivery port of the fan 72 is in communication with heat recovery means, such as a dryer or the like, through an exhaust flow passage 74. The fan 72 partially extracts the combustion flue gas from the second and third sections of the zone A so as to adjust the heat-exchange ability of the burner system 64. Also, the high temperature combustion gas induced through the first section from the second and third sections raises the furnace temperature in the first section to provide a heating condition therein.

The zone A further comprises gas flow recirculation means 75, such as an axial fan 75 on a top wall of the furnace body 60, which allows a uniformed furnace temperature distribution and an improved convection heat transfer effects in the zone A due to a combustion gas recirculation therein.

The firing zone B following the preheat zone A consists of a continuous reduction firing zone B1 and a re-oxidizing zone B2 wherein the zone B1 performs a reduction firing step for the tile materials W with a reducing combustion reaction, whereas the zone B2 performs an oxidizing flame firing step for the tile materials W with an oxidizing combustion reaction.

The zone B1 is divided into three compartments or heating section by drop-arches, each section being provided with an inlet port 4 of a reducing combustion gas and an outlet port 5 of a combustion flue gas. The inlet port 4 for introducing the reducing combustion gas into the kiln RH is connected to the reducing combustion gas generator 2 by means of a combustion gas flow passage HB, and the outlet port 5 for exhausting the combustion flue gas produced in the zone B1 is connected to the combustion flue gas treatment apparatus 3 by means of an exhaust gas flow passage HC. The generator 2 produces a reducing combustion gas flow containing carbon monoxide (CO) of approximately 1% ~ 6% in its density, which gas is produced by a combustion reaction of a low air ratio ranging approximately from 0.6 to 0.7. The generator 2 introduces into each section of zone B1, a combustion gas of a reduction atmosphere containing a predetermined densities of carbon monoxide, carbon and hydrogen (CO: C : H), whereby a reducing flame firing atmosphere surrounding the tile materials W is generated and maintained therein. Further, a zonal temperature control or independent temperature control in the respective sections of the zone B1 is effectively achieved by a control of the flow rate of the respective ports 4,5, and therefore, the temperature profile in the zone B1 presents the step-like heat-curve which is stepwisely raised as shown in FIG. 1B.

The tile materials W are passed through the reduction firing atmosphere in the zone B1 and are reduction-fired therein by the firing condition including carbon monoxide and decomposition of the hydrocarbon fuel (hydrogen and so forth). Unburnt matters (CO, H and the like) produced in the zone B1 or those of the combustion gas of the generator 2 passing through the zone B1 are introduced into the combustion flue gas treatment apparatus 3 and undergo a secondary combustion reaction therein, which allows the unburnt matters to be substantially completely burnt.

The re-oxidizing zone B2 following the zone B1 is provided with upper and lower burner systems 81, 80, each having substantially the same arrangement as the aforementioned burner system 64 has. Each of the upper and lower burner systems 81, 80 comprises a pair of regenerators of honeycomb structure (not shown) through which the combustion flue gas produced in the zone B2 passes, fuel supply means (not shown) for introducing a hydrocarbon fuel into the zone B2, and a changeover mechanism of four-way valve type alternately changeable in a predetermined time interval no greater than 30 ~ 60 seconds. Each of the burner systems 80, 81 preheats a combustion air flow to a high temperature range exceeding 800 °C ~ 1000 °C with a heat exchange action between combustion air and combustion flue gas, and introduces it into the zone B2 so as to create a neutral flame or a weak reduction flame therein with the fuel fed from the fuel- supply means. The burner systems 80, 81 control firing conditions in upper and lower sections of the conveyor 61 respectively and maintain the furnace condition in an appropriate temperature range.

The high temperature gas in the cooling zone C having a relatively high oxygen density flows into the zone B2. The tile materials W are subjected to the re-oxidizing reaction by the neutral flame or weak oxidizing flame of the burner systems 80, 81 as well as affected by the hot gas of the zone C. Thus, the tile materials W passed through the reduction flame firing step in the zone B1 take a re-oxidizing reaction in the zone B2 in which oxidization firing effects are given to the tile materials W.

For instance, the tile materials W, which has been fired in the reduction firing condition of the zone B1 to develop a black color, has re-oxidation firing effects on the surface layers thereof in the zone B2 so as to develop a red or yellow color in the surface layers. Such a series of steps, i,e., the continuous reduction firing step in the firing zone B allows a core portion of the tile material W to develop a black color and causes the surface thereof to develop a yellow or red color at least partially. Thus, the tile material W can present a red or yellow color layer extending the whole surface thereof and black color portions partially exposing thereon, so that an irregular pattern, such as a spotted or dotted pattern, is presented on the produced tile surface.

The high temperature tile materials W having the reduction firing effects and re-oxidation effects in the zone B are then transferred to the cooling zone C to take a cooling step. The zone C has a cooling condition of a desired temperature gradient, which allows the tile materials W to be slowly cooled. The zone C promotes a development of a desired color in relation to its slow cooling action. In the conventional roller hearth kiln, the temperature gradient of such a cooling zone in the range of approximately 1100 °C ~ 900 °C has been 150 °C / hr or greater in the temperature falling rate or cooling temperature gradient. However, the temperature falling rate in the zone C is limited to the range no greater than approximately 75 °C/hr in this embodiment. Such a slow cooling condition allows the tile materials W to develop a relatively strong red color in their surface layers, which can be preferably applied to specific tile products, such as architectural exterior tiles.

The high temperature air flow generator 1 is connected with a high temperature air inlet port 6 provided in the zone C by means of the high temperature air introduction passage HA. The generator 1 heats and supplies an air flow to the zone C through the inlet port 6, with the air temperature being raised up to a predetermined temperature range and the normal oxygen density of the ambient atmosphere remaining unchanged. The high temperature air introduced by the generator 1, which has a relatively high oxygen density, controls the temperature gradient in the zone C in order to prevent an over-cooling of the tile materials W resulting from an excess and rapid cooling action, and therefore, a slow cooling condition of a relatively rich oxygen atmosphere is provided in the zone C.

The rapid cooling zone D following the zone C relatively rapidly cools the tile materials W down to the transition point temperature range. The zone D is provided with an ambient air inlet port 90 on the top wall of the furnace body 60, and an ambient air introduction fan 92 is connected to the inlet port 90 by means of an introduction passage 91. The fan 92 introduces ambient atmospheric air into the zone D through the passage 91 and the inlet port 90, so that the ambient air is blown onto the tile materials W to act as a cooling air flow.

The zone D is followed by the transition point zone E, which further cools the tile materials W in a temperature range around the transition point temperature. The zone F following the zone E cools the tile materials W down to the dischargeable temperature around 200°C ~ 300 °C, and deliver them out of the kiln RH. A cooling air inlet port 94 opens on a side wall of the furnace body 60, which feeds a cooling air flow generally horizontally. The inlet port 94 is connected with an outdoor air intake fan 96 through an outdoor air introduction passage 95, so that the fan 96 induces ambient air and delivers it through the inlet port 94 into the zone F to generate a cooling air flow parallel to the tile materials W.

An exhaust fan 99 for inducing a relatively high temperature combustion flue gas is connected with flue gas outlet ports 97 in the zones D and F through flue gas ducts 98. A flue gas duct 100 is connected to a delivery port of the fan 99. A downstream end of the duct 100 is connected to a heat recovery means, such as a dryer ( not shown ) and/or the other heat recovery devices, if desired.

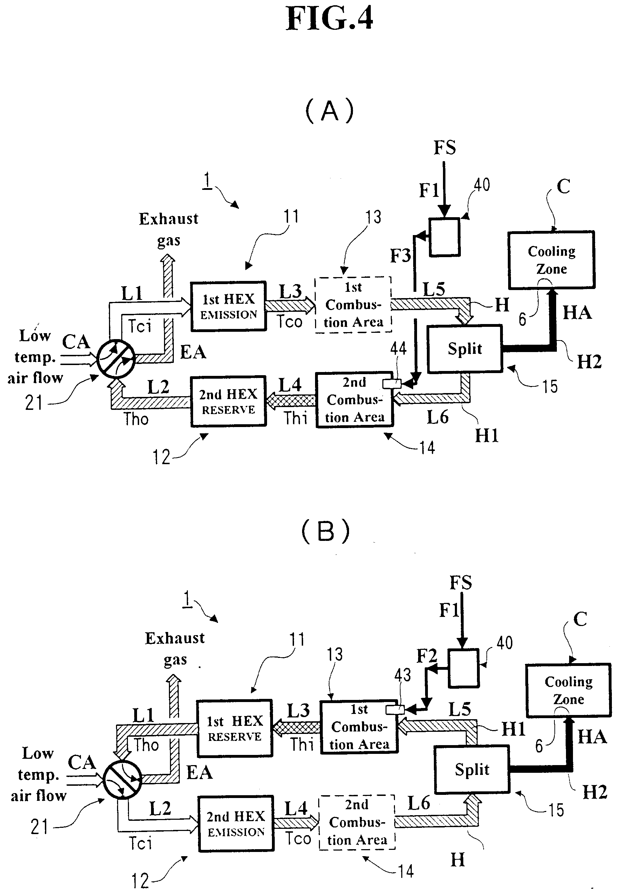

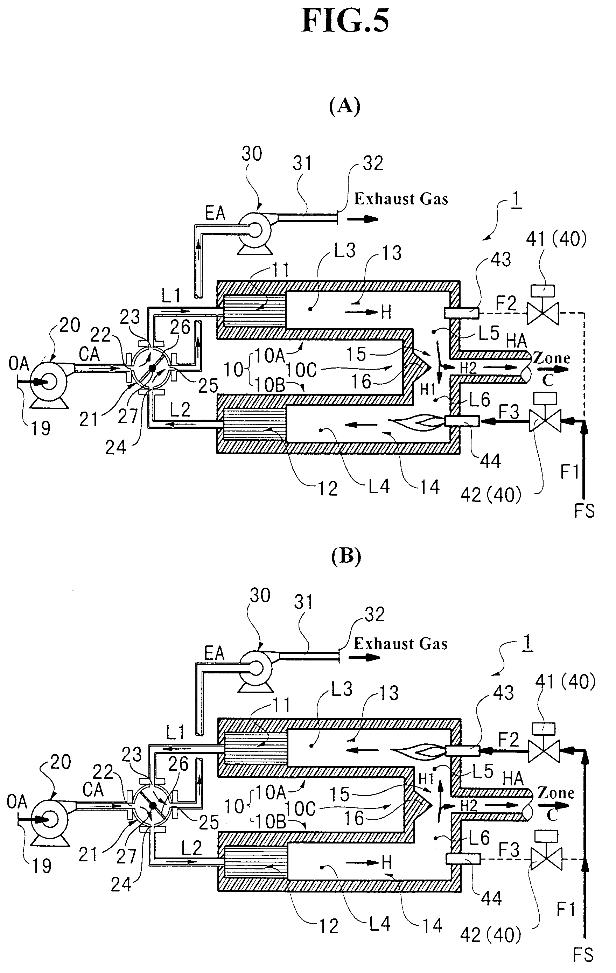

The construction and operation mode of the high temperature air flow generator 1 are illustrated in FIGS. 4 and 5. The figure indicated by (A) shows a first process in which the changeover means 21 of the generator 1 takes its first position, whereas the figure indicated by (B) shows a second process in which the changeover means 21 takes its second position.

As shown in FIG. 4, the generator 1 comprises first and second flow passages L1, L2 to be selectively in communication with an air introduction passage CA and an exhaust gas passage EA; first and second heat-exchangers 11, 12 for heating the low temperature air flow up to a predetermined temperature range; a splitting area 15 dividing an air flow H into two discrete streams H1, H2; and first and second combustion areas or chambers 13, 14 generating a combustion reaction of a hydrocarbon fuel and the first stream H1.

The passage CA is connected to a delivery port of a forced draft fan or blower 20 as shown in FIG. 5, and a suction port of the fan 20 is connected to an ambient air intake 19 by means of an air intake passage OA. The fan 20 induces ambient atmospheric air in a normal condition, such as outdoor air, through the air intake 19 and deliver it to the passage CA under pressure.

As shown in FIG. 5, the changeover means 21 has an air inlet port 22 in communication with the passage CA, a first inlet/outlet port 23 in communication with the first passage L1, a second inlet/outlet port 24 in communication with the second passage L2, and an exhaust gas outlet port 25 in communication with the passage EA. The first port 23 is connected to a proximal end of the first heat-exchanger 11, and the second port 24 is connected to a proximal end of the second heat-exchanger 12.

The changeover mechanism 21 includes a rotary four-way valve assembly selectively switched to the first and second positions and the valve assembly is operated by a high speed or high cycle changeover device (not shown). A rotary valve body 26 in a form of plate is fixed on a central rotary shaft 27. The shaft 27 is driven in rotation by a driving device (not shown), which operates the valve assembly to selectively occupy the first position as shown in FIGS. 4A: 4B or the second position in FIGS. 4B: 5B.

The driving device alternately rotates the shaft 27 at a predetermined time interval, which is preset to be no longer than 60 seconds, more preferably, no longer than 30 seconds, whereby the changeover mechanism 21 is alternately switched to the first position and the second position. The changeover mechanism 21 keeps the valve body 25 in the first position while a combustion reaction is generated in the second combustion area 14, wherein the first passage L1 is communicated with the air introduction passage CA and the second passage L2 is communicated with the exhaust gas passage EA, as shown in FIGS. 4A and 5A. On the other hand, the changeover mechanism 21 keeps its valve body 26 in the second position while a combustion reaction is generated in the first combustion area 13, wherein the second passage L2 is communicated with the passage CA and the first passage L1 is communicated with the passage EA, as shows in FIGS. 4B and 5B.

As shown in FIG 5, the generator 1 comprises a first heating unit 10A, a second heating unit 10B and a communication unit 10C, and they constitute a high-cycle regenerative combustion system. The first and second heater unit 10A, 10B contain the first and second heat-exchangers 11, 12, first and second intermediate passages L3, L4, and the first and second combustion areas 13, 14, respectively. The communication unit 10C connects the first and second heating units 10A, 10B with each other, and contains a third and forth intermediate passages L5, L6 and splitting area 15. The first and second heating units 10A, 10B have substantially the same construction and function. These units 10A, 10B, 10C are positioned symmetrically with respect to a center axis of the generator 1, and they are integrally formed from desired thermal-resistant refractory materials, such as thermal-resistant castable lining materials, refractory bricks, insulating firebricks, thermal-resistant ceramic materials or the like.

As shown in FIG. 5, the first and second combustion areas 13, 14 are provided with first and second burners 43, 44 for creating a flame in the respective combustion areas 13, 14. The first burner 43 is connected to a first fuel feed pipe F2 for feeding a hydrocarbon fuel to the burner 43, and the second burner 44 is connected to a second fuel feed pipe F3 for feeding the hydrocarbon fuel to the burner 44. The feed pipes F2, F3 are connected to a main fuel feed pipe F1 through a fuel control device 40, and the feed pipe F1 is connected to a fuel supply system FS.

The fuel control means 40 includes first and second fuel control valves 41, 42, the first valve 41 interposed between the feed pipes F1, F2, and the second valves 42 interposed between the feed pipes F1, F3. The control means 40 is operated in synchronism with the changeover mechanism 21 under control of electric control devices and the like (not shown), so that the first and second valves 41, 42 are selectively opened to alternately supply a hydrocarbon fuel to either one of the first and second burners 43, 44. Therefore, the first burner 43 injects the fuel into the first combustion area 13 when the changeover means 21 resides in the second position (FIGS. 4B; 5B) and stops the injection in its first position ( FIGS. 4A; 5A), whereas the second burner 44 injects the fuel into the second combustion area 14 when the changeover means 21 is in the first position (FIGS. 4A; 5A), and stops the injection in its second position (FIGS. 4B; 5B).

The burners 43, 44 are positioned on end walls of the first and second heating units 10A, 10B, so that a flame facing the open end surface of the heat-exchanger 11, 12 is formed in the combustion area 13, 14. Each of the first and second burners 43, 44 is provided with attachments or accessories such as a pilot burner, ignition transformer and so forth. Depiction of those attachments or accessories, however, are omitted from the drawings for the purpose of simplification of illustration.

The communication unit 10C has a structure symmetrical with respect to the center axis of the generator 1, and an inside wall of the unit 10C is formed with a protrusion or projection 16 in a triangle formation, which projects inward of the flow passage in alignment with the center axis. An inlet port of the high temperature air introduction passage HA opens on the inside wall in alignment with the center axis and is positioned in opposition to the apex of the protrusion 16. The protrusion 16 locally forms a narrow passage portion between the third and fourth intermediate flow passages L5, L6. The protrusion 16 functions as an orifice or fluid flow resistance, and acts as dividing means for splitting the heated air flow H into first and second heated air flows H1, H2 and orienting the divided flows H1, H2 in predetermined directions. Further, the internal pressure in the heating units 10A, 10B is effected by the delivery pressure and suction pressure of the fans 20, 30, and the internal pressure in the passage HA are balanced or adjusted by the orifice formed by protrusion 16. Thus, the heated air flow H flowing into the splitting area 15 is divided into the first and second streams H1, H2, each having a desired flow ratio in accordance with dynamic pressure control and flow splitting action of the protrusion 16.

Each of the first and second heat-exchangers 11, 12 comprises a ceramic regenerator of honeycomb structure with a great number of cell passages or apertures through which the air flow can be passed. For example, a commercially available ceramic honeycomb products having a large number of narrow cell passages can be preferably used for the regenerator, which is generally used for a media of catalyst in an ammonium selective catalytic reduction method.

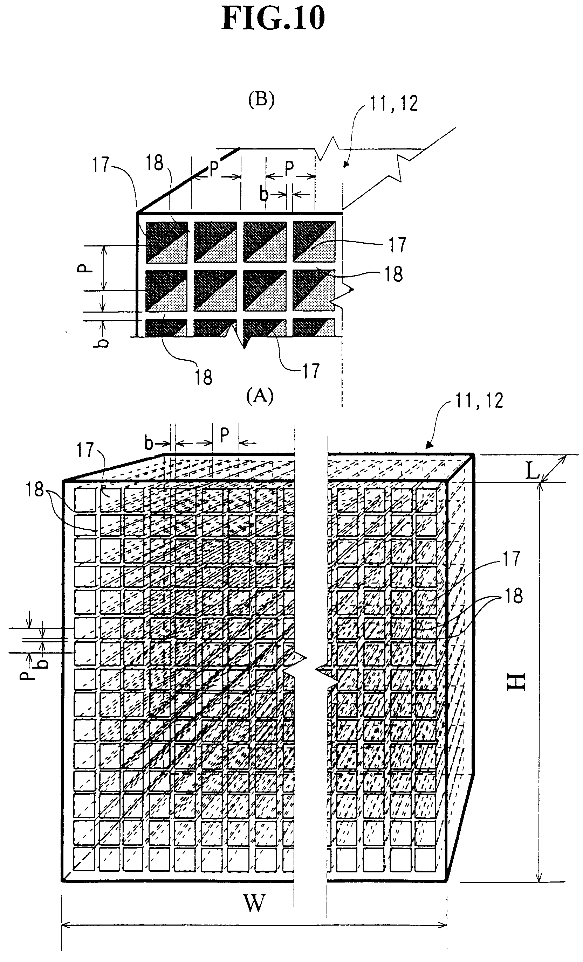

The honeycomb structure of the regenerator is illustrated in FIG. 10, which is formed in a lattice formation with a plurality of cell apertures 17 each having a square cross-section. The width W, the length L and the height H are set to be the dimensions adapted for incorporation in the heating unit 10A, 10B, and the honeycomb wall thickness b (the wall thickness of a cell wall 18) and the honeycomb pitch P (the distance between the cell walls 18) preferably correspond to a maximum volumetric efficiency so as to ensure the temperature efficiency or heat-exchanger effectiveness in a range of 0.7 ~ 1.0. More preferably, the honeycomb wall thickness b is set to be no greater than 1.6 mm and the honeycomb pitch P is set to be no greater than 5.0 mm. The structure of such a regenerator is disclosed in detail in Japanese Patent Application No. 5-6911 (Japanese Patent Laid-Open Publication No. 6-213585) filed by the applicant of the present application, and therefore, further explanation thereon is omitted by the reference thereof.

In the first heating process (the first position of the changeover means 21) as shown in FIG. 5A, the ambient air or low temperature air introduced into the first passage L1 is passed through the first heat-exchanger 11, and the high temperature air flow H heated up to a predetermined temperature by the heat-exchanger 11 flows into the splitting area 15 through the intermediate flow passages L3, L5 and the first combustion area 13. The heated air flow H is split into the first and second air flows H1, H2 in the splitting area 15.

The first air flow H1 is introduced into the second combustion area 14 through the intermediate passage L6 to be a combustion air flow, which takes a combustion reaction therein with the fuel injected from the second burner 44 so as to produce a high temperature combustion flue gas. The combustion flue gas thus produced is introduced into the open end of the second heat-exchanger 12 through the intermediate passage L4, and the hot gas flows through the heat-exchanger 12 to heat it up to a predetermined temperature, and then, delivered from the other end of the heat-exchanger 12 to the second flow passage L2. The cooled combustion exhaust gas in the passage L2 is induced by the fan or blower 30 and discharged through the exhaust gas passage 31 and the discharge port 32 to the ambient atmosphere.

As shown in FIG. 4A, the low temperature air flow (temperature:Tci) introduced from the passage CA passes through the flow passage 17 of the first heat exchanger 11 to be in a heat-transferable contact with the surfaces of the cell walls 18, so that the air flow (temperature:Tci) is heated to the high temperature (temperature:Tco) by the heat-exchange action therebetween. The high temperature air flow H flows into the splitting area 15, and a predetermined ratio of the air flow (temperature:Tco) is fed to the second combustion area 14 as the first air flow H1, while a predetermined ratio of the air flow (temperature:Tco), which is the remaining part of the air flow H in this embodiment, is introduced into the high temperature air flow introduction passage HA as being the second air flow H2. The second air flow H2 is introduced into the cooling zone C of the kiln RH through the inlet port 6 to regulate the furnace temperature in the zone C. The combustion exhaust gas at the high temperature ( Temperature: Thi ) produced in the second combustion area 14 is passed through the flow passages 17 of the second heat exchanger 12. As a result of heat transferable contact between the combustion exhaust gas and the cell walls 18, the heat-exchanger 12 is heated and the combustion flue gas is cooled down to the temperature Tho, which is exhausted through the passage L2, EA and the changeover means 21.

In the second heating process (the second position of the changeover means 21) as shown in FIG. 5B, the ambient air introduced into the first passage L1 is passed through the second heat-exchanger 12 to be heated to the predetermined temperature by the heat-exchanger 12, and the high temperature air flow H flows into the splitting area 15 through the intermediate flow passages L4, L6 and the second combustion area 14. The hot air flow H is split into the first and second discrete streams H1, H2 in the splitting area 15.

The first air flow H1 is introduced into the first combustion area 13 through the intermediate passage L5 and effects a combustion reaction therein with the fuel injected from the first burner 43. The combustion exhaust gas produced in the combustion area 13 is introduced into the first heat-exchanger 11 through the intermediate passage L3 to heat the heat-exchanger 11 to the predetermined temperature, and then, discharged to the ambient atmosphere through the first flow passage L2, the exhaust gas passage EA and the discharge port 32 by the induced draft fan 30.

As shown in FIG. 4B, the low temperature air flow (temperature:Tci) introduced from the passage CA passes through the flow passage 17 of the second heat exchanger 12, so that the air flow (temperature:Tci) is heated to the high temperature (temperature:Tco) by the heat-exchange action with the cell walls 18. The high temperature air flow H flows into the splitting area 15, and the first air flow H1 (temperature:Tco) of the predetermined ratio is fed to the first combustion area 13 to generate the combustion reaction therein, while the second air flow H2 (temperature:Tco) of the remaining ratio is introduced through the introduction passage HA into the cooling zone C of the kiln RH. The combustion exhaust gas at the high temperature (Temperature: Thi) produced in the first combustion area 14 is passed through the flow passages 17 of the heat exchanger 11 to heat the cell walls 18 thereof and the combustion exhaust gas (Temperature: Tho) cooled thereby is exhausted through the passage L1, EA and the changeover means 21.

According to the high temperature air flow generator 1 as set forth above, the low temperature air flow (temperaure:Tci) introduced through the flow passage OA is continuously heated up to the required high temperature (temperaure:Tco) by means of heat transmission effects between the air flow (temperaure:Tci) and the combustion exhaust gas (temperaure:Thi) through the heat accumulation action / heat emission action of the regenerators 11, 12. The second air flow H2 adjusted to the desired high temperature by the sensible heat emission of the heat-exchangers 11, 12 is introduced into the cooling zone C to regulate and control the furnace temperature therein, and therefore, the descending temperature gradient curve of the zone C can be controlled to be a relatively slow and low cooling gradient as shown in FIG. 1B.

Further, the temperature gradient or temperature falling rate corresponding to the flow rate and the temperature of the second air flow H2 can be preferably regulated by the control of combustion condition in the combustion area 13, 14, the air flow rates in the respective passages, the fuel consumption, a variable setting of the switching cycle time of the changeover means 21, and the like. It should be noted that the composition of the second air flow H2, such as oxygen concentration thereof, can be kept substantially in the same state as that of the introduced ambient air (normal outdoor air), because the generator 1 merely heats the ambient cold air flow and prevents the composition of the ambient cold air flow from being changed while heated. Thus, the property and constituents of the air flow H2 is not affected by the heating action of the generator 1, and therefore, the generator 1 is able to supply the high temperature air flow H2 of a desired oxygen density, e.g., a hot air flow containing a relatively rich oxygen density to the zone C without provision of specific means for reforming the hot air flow H2, such as an auxiliary oxygen supply means for adding an oxygen gas to the air flow H2.

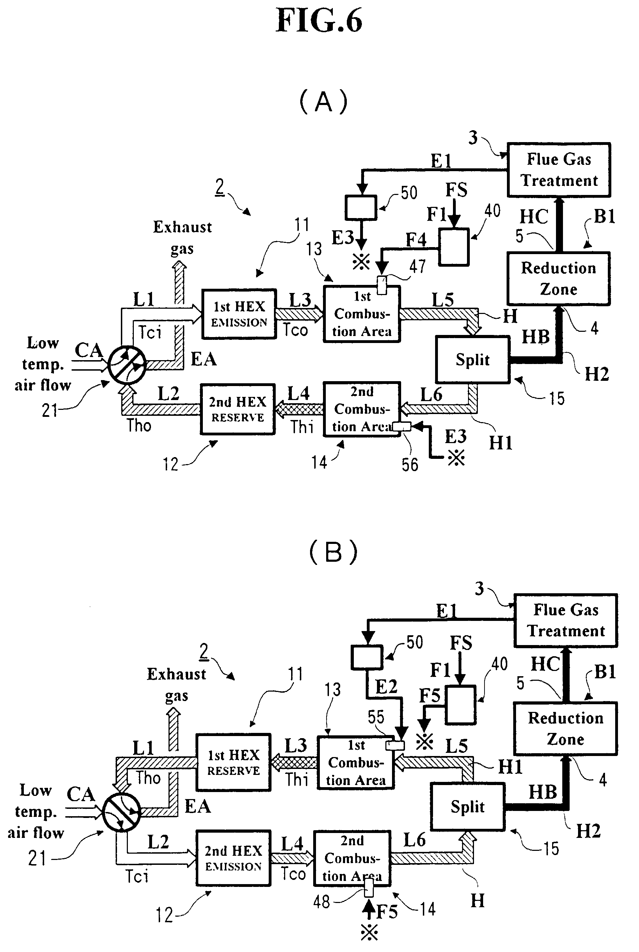

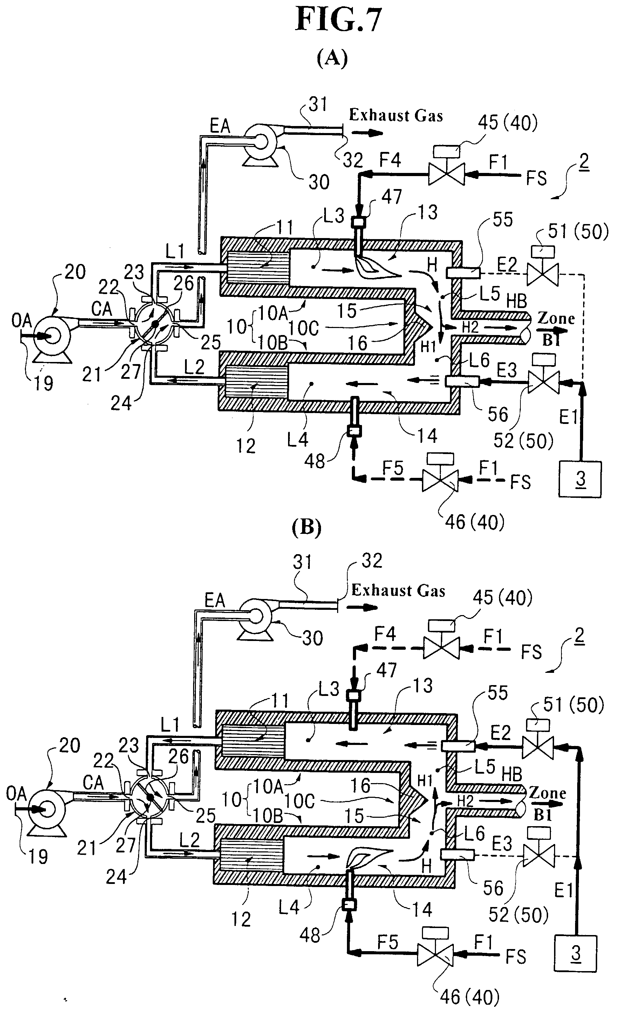

The whole construction and the operation mode of the reducing combustion gas flow generator 2 is shown in FIGS. 6 and 7, which is installed on the continuous reduction zone B1 of the kiln RH. In those figures, the elements or means which are substantially same as those of the generator 1 as shown in FIGS. 4, 5 or equivalent thereto, are indicated by the same reference numerals.

The reducing combustion gas flow generator 2 is provided with changeover means 21, first and second flow passages L1, L2, first and second heat-exchangers 11, 12, first and second combustion areas 13, 14 and splitting area 15, which have substantially the same construction as those of the generator 1 have. The generator 2 also has a forced draft fan 20 shown in FIG. 7 for introducing normal outdoor air into the changeover means 21 through the air intake passage OA, and an induced draft fan 30 as shown in FIG. 7 connected with the changeover means 21 through the exhaust gas passage EA.

The first and second combustion areas 13, 14 comprise third and forth burners 47, 48 for generating a reducing flame in the respective areas 13, 14. Tile third burner 47 is connected with a third fuel feed pipe F4 for feeding a hydrocarbon fuel, and the forth burner 48 is connected with a forth fuel feed pipe F5 for feeding the fuel. The fuel feed pipes F4, F5 are connected to a main fuel feed pipe F1 of the fuel supply system FS by means of fuel supply control means 40, which includes third and forth control valves 45, 46 as shown in FIG. 7. The control valves 45, 46 are operated in synchronism with the changeover means 21 under control of electronic control devices (not shown), so that the valves 45, 46 alternately feed the combustion fuel to either one of the third and forth burners 47, 48.

As seen from FIGS. 6, 7, the generator 2 generally has a construction similar to that of the generator 1 shown in FIGS. 4, 5. The generator 2, however, significantly differs from the generator 1 in that the third burner 47 injects the fuel into the first combustion area 13 when the changeover means 21 takes the first position as shown in FIGS. 6A, 7A and stops the injection in its second position as shown in FIGS. 6B, 7B, and that the forth burner 48 injects the fuel into the second combustion area 14 when the changeover means 21 takes the second position as shown in FIGS. 6B, 7B and stops the indection in its first position as shown in FIGS. 6A, 7A.

The third and fourth burners 47, 48 are located on the side walls of the first and second heating units 10A, 10B to generate a flames in each of the first and second combustion zones 13, 14, and the amount of fuel consumption of the burners 43, 44 and the amount of combustion air delivered by the fan 20 are relatively controlled, so that the reducing flame is alternately created in each of the combustion areas 13, 14 by the respective burners 47, 48. That is, the flow rate of combustion air flow is adjusted or limited to result in the air ratio less than 1.0, e.g., the air ratio in the order of 0.6 ~ 0.7 with respect to the theoretical amount of air required for complete combustion of the hydrocarbon fuel fed through the burner 47, 48, and the combustion air flow of such a limited flow rate is introduced through the heat-exchangers 11, 12 into the combustion areas 13, 14 under pressure of the fan 20, whereby the reducing flame is generated in the combustion areas 13, 14. The combustion air is preheated to a high temperature range above 800 °C ~ 1000 °C by the heat-exchangers 11, 12 of, honeycomb structure, and the burners 47, 48 alternately inject the fuel into the extremely hot air flow to create the reducing flame resulted from the reducing combustion reaction in the combustion areas 13, 14. The reducing combustion gas is produced in the combustion areas 13, 14 with the incomplete combustion reaction of the reducing flame, and the resultant gas is fed to the splitting area 15 as a hot gas flow H of reduction atmosphere, which contains quantities of carbon monoxide, carbon and hydrogen ( $CO$; $C_2$; $H_2$ ). The reducing gas flow H is divided into the first and second gas flow H1, H2 in the splitting area 15.

It is found that a flame generated in the extremely high temperature preheated air flow above 800 °C, especially, above 1000 °C can realize a stable combustion reaction in the combustion zone in a very wide range of air ratio, e.g., the aforementioned low air ratio. In comparison with the conventional combustion reaction generated by a preheated combustion air of a temperature lower than 400 °C or a preheated combustion air of a relatively high temperature ranging from 400~800°C, the flame in the area 13, 14 is significantly stabilized in the combustion reaction with use of the extremely high temperature combustion air above 800~1000°C. This is considered to be derived from the phenomenon in that the nature of combustion flame entirely differs from that of the conventional flame in a reaction velocity or the like, the reaction velocity being effectively increased by the extremely high temperature combustion condition. In addition, the combustion air is heated up to the temperature higher than the self-ignition temperature of the fuel supplied to the combustion zone, and therefore, an ignition action can be spontaneously effected without external ignition means. Further, the air flow rate or a feeding velocity of the combustion air can be substantially increased, e.g., up to an air flow velocity not less than 80~100 meters per a second (m/s), while maintaining a combustion stability without extinguishing the flame.

In the first position of the changeover means 21 shown in FIGS. 6A, 7A, the first gas flow H1 divided from the reducing gas flow H is introduced into the second combustion area 14, and the gas flow H1 undergoes an after-burning reaction (re-combustion reaction) therein. An exhaust gas flow of the exhaust gas treatment apparatus 3 at relatively high temperature is introduced into the second combustion area 14 through the exhaust gas passages E1, E3 and a second on-off valve 52 of control valve means 50 to be mixed with the first gas flow H1. Unburnt matters contained in the gas flow H1 are subjected to a complete combustion reaction in the high temperature atmosphere and the large volume of the second combustion area 14. The high temperature combustion exhaust gas produced in the combustion area 14 passes through the honeycomb passages 17 of the second heat exchanger 12 and heats the cell walls 18 thereof. The flue gas cooled by the heat exchanger 12 is introduced through the changeover means 21 and the exhaust gas passage EA, and discharged to the ambient atmosphere through the exhaust passage 31 and the discharge port 32 by the exhaust fan 30.

In the second position of the changeover means 21 shown in FIGS. 6B, 7B, the first gas flow H1 divided from the reducing gas flow H is introduced into the first combustion area 14, and the gas flow H1 undergoes an after-burning reaction therein. The relatively hot exhaust gas flow of the exhaust gas treatment apparatus 3 is introduced into the first combustion area 14 through the exhaust gas passages E1, E2 and a first on-off valve 51 of the control valve means 50 to be mixed with the first gas flow H1. Unburnt materials in the gas flow H1 are subjected to a complete combustion reaction in the first combustion area 13, and the hot combustion exhaust gas produced in the combustion area 13 passes through the honeycomb passages 17 of the first heat exchanger 11, so that the cell walls 18 thereof are heated. The flue gas cooled by the heat exchanger 11 is extracted through the changeover means 21 and the exhaust gas passage EA and discharged to the ambient atmosphere through the exhaust passage 31 and the discharge port 32 by the exhaust fan 30.

The second gas flow H2 split in the splitting area 15 is continuously delivered to a combustion gas passage HB as a high temperature combustion gas flow of a reduction atmosphere, and continuously introduced into the reduction firing zone B1 of the roller hearth kiln RH. The reducing combustion gas H2 at a high temperature, which contains a relatively large quantities of carbon monoxide and hydrogen, is introduced into the kiln RH through the gas passage HB and the reducing gas inlet ports 4, as shown in FIG. 3B so as to provide a reduction firing atmosphere therein. As a result, the tile materials W are fired in the reduction firing atmosphere of the zone B1. As shown in FIG. 3B, the combustion flue gas produced in the zone B1 is introduced from the combustion flue gas outlet port 5 into the exhaust gas passage HC through which the flue gas is fed to the combustion flue gas treatment apparatus 3.

As a preferable temperature condition of generators 1, 2, the temperature Tci of the air flow CA can be a predetermined temperature in a range from 10°C to 30°C, and the temperature Tco of the heated air flows H, H1, H2 may be set to be a predetermined temperature in a range between 800 °C and 1400 °C. Further, the temperature Thi of the combustion exhaust gas in the combustion areas 13, 14 can be set to be a predetermined temperature in a range from 1,000 °C to 1,600 °C, and the temperature Tho of the combustion exhaust gas EA can be set to be a predetermined temperature in a range between 200 °C and 400°C. Further, the switching cycle time of the changeover means 21 is preferably set to be a predetermined time interval no longer than 60 seconds, more preferably, no longer than 30 seconds.

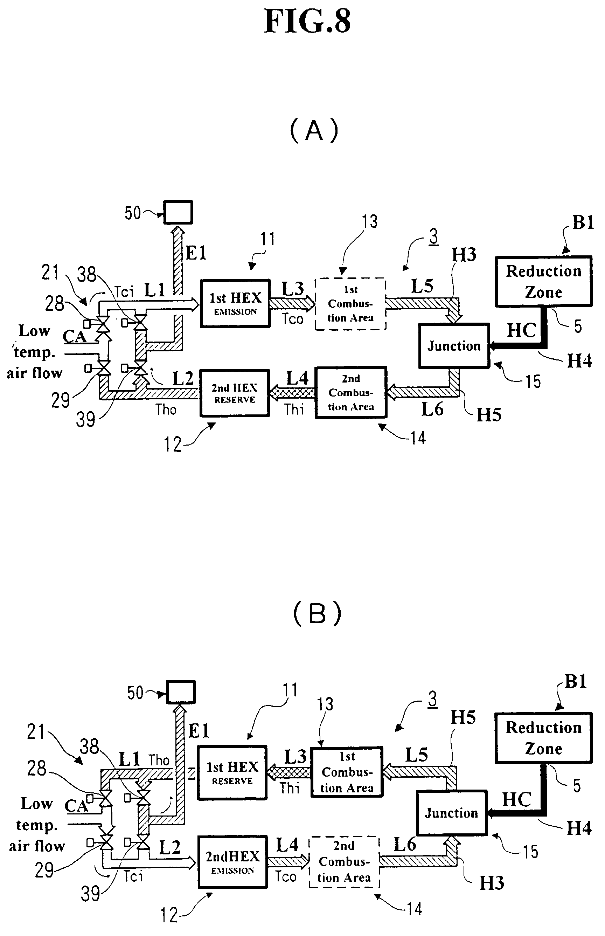

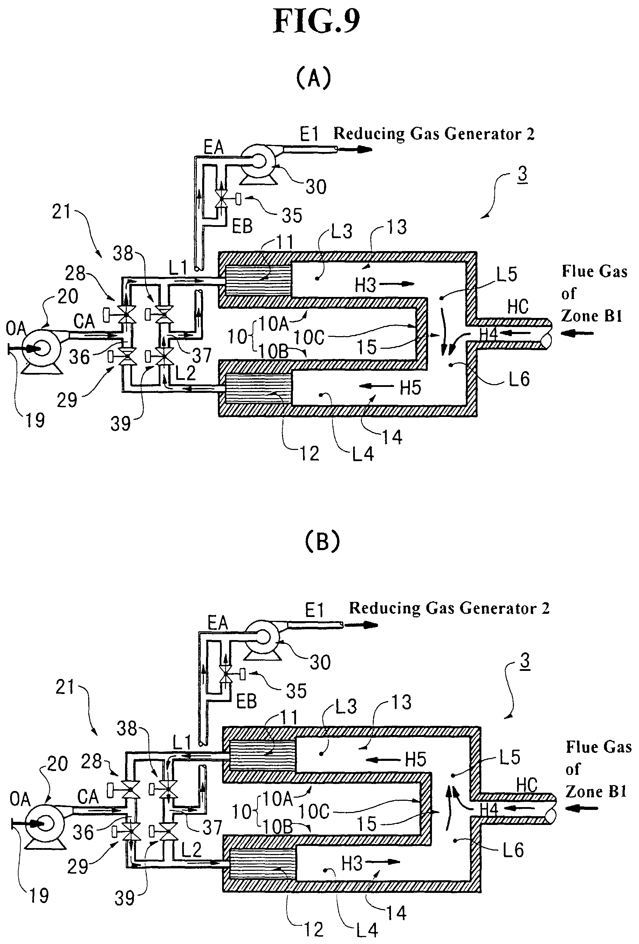

The whole construction and the operation mode of the combustion flue gas treatment apparatus 3 are shown in FIGS. 8 and 9, which is installed in the continuous reduction zone B1 of the kiln RH. In those figures, the elements or means which are substantially same as those of the generators 1, 2 shown in FIGS. 4 to 7 or equivalent thereto, are indicated by the same reference numerals.

The combustion flue gas treatment apparatus 3 comprises changeover means 21, first and second flow passages L1, L2, first and second heat-exchangers 11, 12, and first and second combustion areas 13, 14, which have substantially the same construction as those of the generators 1, 2 have. The apparatus 3 also has a forced draft fan 20 shown in FIG. 9 for introducing normal outdoor air into the changeover means 21 through the air intake passage OA, and an induced draft fan 30 as shown in FIG. 9 connected with the changeover means 21 and the exhaust gas passage EA.

In the combustion flue gas treatment apparatus 3 as shown in FIGS. 8 and 9, the communication unit 10C has a junction area 15 instead of the aforementioned splitting area 15 in the generators 1, 2. The high temperature combustion flue gas fed through the combustion flue gas passage HC is introduced into the junction area 15. The junction area 15 differs from the above splitting area 15 of the generators 1, 2 in that it has an equal cross-section overall the length without provision of the triangle protrusion 16.

Further, the apparatus 3 is provided with first and second on-off intake valves 28, 29, and first and second on-off exhaust valves 38, 39. The first and second intake valves 28, 29 are in communication with each other by means of a T-shaped connection passage 36, and the first and second exhaust valves 38, 39 are in communication with each other by means of a T-shaped connection passage 37, as shown in FIG. 9. The first intake valve 28 and the second exhaust valve 39 are operated in association with each other so as to simultaneously open and simultaneously close, whereas the second intake valve 29 and the first exhaust valve 38 are operated in association with each other so as to simultaneously open and simultaneously close. A controller (not shown) of the apparatus 3 controls the valves 28, 29, 38, 39 so as to open the valves 28, 39 and close the valves 29, 38 in the first treatment process as shown in FIG. 9A, and the controller controls the valves 28, 29, 38, 39 so as to close the valves 28, 39 and open the valves 29, 38 in the second treatment process as shown in FIG. 9B.

The changeover means 21 is alternately switched to the first position corresponding to the first process and the second position corresponding to the second process. The switching cycle time of the changeover means 21 is set to be a predetermined time interval preferably no longer than 60 seconds, more preferably, no longer than 30 seconds. The regenerators of the first and second heat-exchangers 11, 12 repeatedly effects heat-accumulation and heat-emmission in correspondence to the above time interval, so that the ambient air flow supplied by the fan 20 is heated and the combustion exhaust gas produced in the first and second combustion areas 13, 14 is cooled.

In the first process as shown in FIG. 9A, the ambient air in a normal temperature is fed to the first heat-exchanger 11 through the first intake valve 28 and the first air flow passage L1. The high temperature air flow H3 heated by the heat-exchanger 11 flows into the junction area 15 through the first combustion area 13 and the intermediate flow passage L3, L5. The hot air flow H3, which has a relatively rich oxygen concentration and a high temperature, is joined with the flue gas flow H4 of the flue gas passage HC in the junction area 15. The flue gas flow H4 thus joined with the heated air flow H3 is fed to the second combustion area 14 as being a mixed gas flow H5. The gas flow H5 is modified to be a turbulent flow while expanding and diffusing in a relatively large volume of the second combustion area 14, so that the unburnt matters contained in the gas flow H5, in particular, carbon monoxide and hydrogen undergo a re-burning reaction therein. Thus, the incomplete combustion flue gas produced in the zone B1 of the kiln RH is substantially completely burnt in the combustion area 14. A high temperature combustion exhaust gas produced by such a re-burning reaction of the gas flow H5 exchanges heat with the second heat-exchanger 12 to heat it, and then, passes through the second passage L2, the second exhaust valve 39 and the exhaust gas flow passage EA under a suction pressure of the exhaust fan 30. The fan 30 delivers the exhaust gas to the control valve means 50 of the reducing combustion gas generator 2 through the exhaust passage E1, as shown in FIGS. 6 and 7.

In the second process as shown in FIG. 9B, the ambient air is fed to the second heat-exchanger 11 through the second intake valve 29 and the second air flow passage L2, and heated by the heat-exchanger 12. The high temperature air flow H3 flows into the junction area 15 through the first combustion area 13 and the intermediate flow passage L4, L6, and joins the flue gas flow H4 in the junction area 15. The mixed gas flow H5 is fed to the first combustion area 13. The unburnt matters contained in the gas flow H5 are substantially completely re-burnt with the after-burning reaction in the combustion area 13, and the hot combustion exhaust gas produced in the combustion area 13 is introduced through the first heat-exchanger 11 to heat it, and thereafter, fed through the first passage L1, the first exhaust valve 38 and the exhaust gas flow passage EA under a suction pressure of the exhaust fan 30, and delivered to the control valve means 50 of the generator 2 through the exhaust passage E1.

As a preferable temperature condition of apparatus 3, the temperature Tci of the air flow CA can be a predetermined temperature in a range from 10°C to 30°C, and the temperature Tco of the heated air flows H3 can be set to be a predetermined temperature in a range between 800 °C and 1400 °C. Further, the temperature Thi of the combustion exhaust gas in the combustion areas 13, 14 can be set to be a predetermined temperature in a range from 1,000 °C to 1,600 °C, and the temperature Tho of the combustion exhaust gas EA can be set to be a predetermined temperature in a range between 300 °C and 600°C.

The apparatus 3 is provided with an exhaust gas bypass passage EB and a bypass flow control valve 35. The operation of the control valve 35 enables variation of control mode in association with the operation of the intake valves 28, 29 and the exhaust valves 38, 39 of the changeover means 21, and this can improve the applicability or variance of the flow control in the combustion flue gas treatment apparatus 3. These valves 28, 29, 38, 39, 35 are preferably assembled by thermal-resistant or refractory materials so as to ensure controllability of the high temperature combustion exhaust gas.

As described above, the roller hearth kiln RH with the above arrangement comprises the high temperature air flow generator 1 for controlling the temperature profile or temperature curve in the cooling zone C so that a slow cooling temperature gradient is achieved and a cooling atmosphere is provided in the zone C to slowly cool the tile materials W, thereby promoting the desired development of red color on the tile surface; the reducing combustion gas generator 2 for feeding the high temperature combustion gas flow of reduction atmosphere to the reduction firing zone B1 so as to generate and maintain the reduction firing reaction of the tile materials W in the zone B1; and the combustion flue gas treatment apparatus 3 for treating the combustion flue gas of the zone B1 containing the unburnt materials ($CO$, $H_2$) so that the unburnt matters are substantially completely burnt in the combustion areas 13, 14.

The generators 1, 2 and treatment apparatus 3 are provided with the air flow passage CA for introducing the ambient air; the exhaust gas passage EA for exhausting the combustion exhaust gas produced in the combustion areas 13, 14; the high temperature air flow passage HA, the reducing combustion gas flow passage HB or the combustion flue gas flow passage HC connected with the zone C or B1 of the kiln RH; the changeover means 21 connected to the flow passages CA and EA; the first and second heat-exchangers 11, 12 and the first and second combustion area 13, 14 selectively communicated with the flow passage CA or EA; and the splitting or junction area 15 functioning as the splitting means or joining means for dividing or receiving the high temperature air flow or the combustion flue gas flow.

The generator 1 further comprises the first and second burners 43, 44 which fire in the split hot air flow H1 of the first and second combustion areas 13, 14, and the generator 2 further comprises the third and fourth burners 47, 48 which fire to create a reducing flame in the first and second combustion areas 13, 14.

The generator 1 alternately performs the first and second heating processes in the predetermined time interval so as to feed the high temperature air flow to the cooling zone C to control the temperature therein for promoting the development of the desired color on the tile surface. The generator 2 creates the reducing flame in the first and second combustion areas 13, 14 and delivers the reducing combustion gas flow to the reduction firing zone B1 so as to control the reducing atmosphere for firing the tile materials W therein. Further, the apparatus 3 allows the combustion flue gas of the zone B1 to take a re-burning or after-buring reaction, thereby ensuring complete combustion of the unburnt materi-

als (CO, $H_2$) of the zone B1 in order to enable a ready discharge of the flue gas of the zone B1.

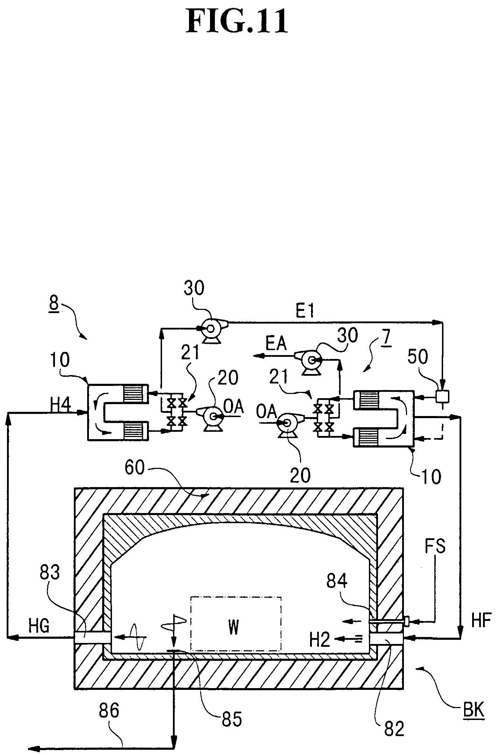

FIG. 11 is a schematic vertical cross-sectional view showing the whole construction of a kiln BK provided with a generator 7 and a treatment apparatus 8 in accordance with the second embodiment of the present invention. In FIG. 11, the elements or means which are substantially the same as those of the generators 1, 2 shown in FIGS. 4 to 9 or equivalent thereto, are indicated by the same reference numerals.

As shown in FIG. 11, the kiln BK is arranged to be a shuttle kiln or single-chamber cellar kiln provided with a hot gas flow generator 7 for introducing a hot air flow or a hot combustion gas flow thereinto, and a combustion flue gas treatment apparatus 8 for extracting combustion flue gas from the kiln BK. The generator 7 is connected with an inlet port 82 through an introduction passage HF, and the apparatus 8 is connected with an exhaust gas outlet port 83 through an flue gas passage HG. A fuel injector 84 for feeding a hydrocarbon fuel into the kiln BK is positioned adjacent to the inlet port 82.

Since the apparatus 8 has substantially the same arrangement as the apparatus 3 shown in FIGS. 8 and 9 has, and therefore, further detail explanation on the constructions and functions thereof is omitted. The generator 7 is essentially of the basic arrangement similar to those of the generators 1, 2 of the first embodiment as set forth above, and carries out both of the functions of the generators 1, 2.

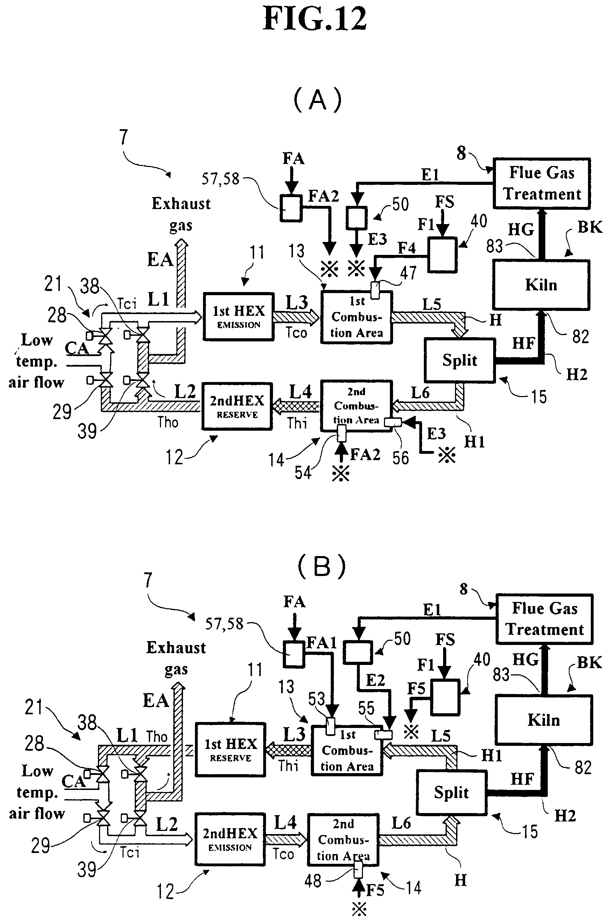

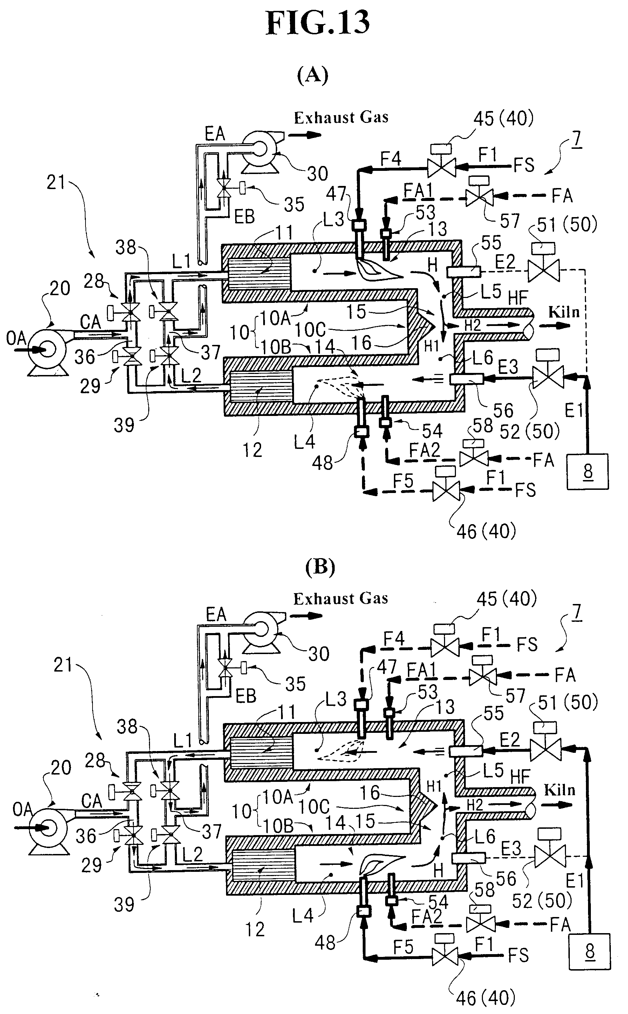

As shown in FIGS. 12 and 13, the generator 7 is equipped with first and second burners 47, 48 which alternately inject a hydrocarbon fuel into the first and second combustion zones 13, 14. The burners 47, 48 are connected with first and second fuel control valves 45, 46 of fuel control means 40 by means of first and second fuel feed pipes F4, F5, and the valves 45, 46 are connected with a fuel supply system FS through a main fuel feed pipe F1.

The fuel control means 40 is operated in synchronism with changeover means 21 under control of electronic control devices (not shown), so that the fuel control valves 45, 46 are selectively opened and closed to alternately supply the combustion fuel to either one of the burners 47,48.

After a charging step of the raw materials W to be fired, the kiln BK successively performs a preheating step, an oxidizing flame firing step, a reducing flame firing step, a slow cooling step and a rapid cooling step. The furnace temperature is raised up to a high temperature range approximately from 1,100°C to 1,300 °C, and thereafter, lowered as represented by the heat-curve on FIG. 1. The generator 7 is operated in a first operation mode during the steps of preheating, oxidizing flame firing and slow cooling, wherein a high temperature air flow of oxidation atmosphere is introduced into the kiln BK. On the other hand, the generator 7 is operated in a second operation mode during the reducing flame firing step, wherein a high temperature combustion gas flow of reduction atmosphere is introduced into the kiln BK. In the first operation mode, the generator 7 operates substantially in the same manner as the operation of the generator 1 of the first embodiment, whereas it operates in the second operation mode substantially in the same manner as the operation of the generator 2 of the first embodiment.

The changeover means 21 of the generator 7 is switched alternately to a first position as shown in FIGS. 12A and 13A and a second position as shown in FIGS. 12B and 13B. In FIGS. 12 and 13, the generator 7 in the second operation mode (reducing flame mode) is illustrated by solid lines.

In the first operation mode (heating mode), the second burner 48 injects the fuel into the second combustion area 14 in the first position (FIGS. 12A, 13A) to generate a flame in the second combustion area 14 as shown by broken lines in FIG. 13A, and stops the fuel injection in the second position of the changeover means 21 (FIGS. 12B, 13B). On the other hand, the first burner 47 injects fuel into the first combustion area 13 in the second position (FIGS. 12B, 13B ) to generate a flame in the first combustion area 13 as shown by broken lines in FIG. 13B, and stops the fuel injection in the first position of the changeover means 21 (FIGS. 12A, 13A).

In the first position of the changeover means 21, the ambient air is introduced into the first heat exchanger 11 by a forced draft fan 20, the air flow H heated to a high temperature range by the heat exchanger 11 is divided at the splitting area 15 into first and second streams H1, H2 in a predetermined flow ratio, and the first air flow H1 undergoes a combustion reaction in the second combustion area 14 to produce a high temperature combustion exhaust gas, which is introduced through the second heat-exchanger 12 to heat it to a predetermined temperature. On the other hand, the air flow H is heated to a high temperature range by the second heat exchanger 12 in the second position of the changeover means 21 and the first air flow H1 split in the area 15 undergoes a combustion reaction in the first combustion area 13 to produce a hot combustion exhaust gas, which is introduced through the first heat-exchanger 11 to heat it to a predetermined temperature.

The second heated air flow H2 in a high temperature range above 800 °C ~1,000 °C flows into the kiln BK through the passage HF and the inlet port 82 as shown in FIG. 11 to raise the furnace temperature to a desired temperature range. In the preheating step and the oxidizing flame firing step, a hydrocarbon fuel is injected from the fuel injector 84, if desired, and the injected fuel is mixed with the effluent air flow of the high velocity and high temperature in the vicinity of the inlet port 82 so that a combustion flame is generated therein. The exhaust gas of the kiln BK is exhausted from an outlet port 85 on furnace floor or the like, and discharged through an exhaust gas passage 86 and a stack (not shown) to the ambient atmosphere. If desired, heat recovery means is provided in the exhaust system.

In the second operation mode (reducing flame mode), the fan 20 supplies the ambient air to the first or second heat-exchanger 11, 12, wherein the flow rate of combustion air is set to correspond to the extensively low air ratio in the order of 0.6 ~ 0.7, i,e., the air ratio less than the theoretical amount of air necessary for complete combustion in relation to the amount of fuel supplied from the first and second burners 47, 48.

The first burner 47 injects the fuel into the first combustion area 13 in the first position of the changeover means 21 as shown in FIGS. 12A, 13A so as to produce a reducing flame in the combustion area 13 as shown by the solid lines in FIG. 13A, and stops the fuel injection in the second position of the changeover- means 21 as shown in FIGS. 12B, 13B. On the other hand, the second burner 48 injects the fuel into the second combustion area 14 in the second position of the changeover means 21 as shown in FIGS. 12B, 13B to produce a reducing flame in the combustion area 14 as shown by the solid lines in FIG. 13B, and stops the fuel injection in the first position as shown in FIGS. 12A, 13A.

In the first position of the changeover means 21 shown in FIGS. 12A, 13A, the air flow is heated to a high temperate range above 800°C~1,000 °C by the first heat-exchanger 11 and the effluent therefrom undergoes the reducing flame combustion reaction in the first combustion area 13, so that reducing combustion gas at a high temperature is produced therein. The reducing combustion gas H flows into the splitting area 15 and is divided into a predetermined ratio of first and second reducing gas flows H1 and H2. The first gas flow H1 flows into the second combustion area 14 and take an after-burning action therein to produce a high temperature exhaust gas, which passes through the second heat-exchanger 12 to heat it up to a predetermined temperature.

In the second position of the changeover means 21 shown in FIGS. 12B and 13B, the high temperature air flow in a temperature range above 800°C~ 1,000 °C undergoes the reducing flame combustion reaction in the second combustion area 14, so that reducing combustion gas at a high temperature is produced therein. The reducing combustion gas flow H is divided into the predetermined ratio of first and second reducing gas flows H1 and H2 in the splitting area 15 and the first gas flow H1 takes an after-burning action in the second combustion area 14 and heats the first heat-exchanger 11.

The high temperature gas flow H2 of reduction atmosphere containing quantities of carbon monoxide and hydrogen is continuously introduced into the kiln BK through the passage HF and the inlet port 82, so that a reduction firing atmosphere at high temperature occurs therein to perform the reducing firing step on the materials W. The exhaust flue gas of the kiln BK containing relatively large amount of unburnt matters is introduced into the combustion flue gas treatment apparatus 8 through the outlet port 83 and the combustion flue gas passage HG and is subjected to a re-burning or after-burning action in the apparatus 8 substantially in the same manner as that of the combustion flue gas treatment apparatus 3 of the first embodiment. The combustion flue gas is substantially completely burnt in the apparatus 8 and thereafter, delivered to the generator 7 through the exhaust gas flow passage E1 and the control valve means 50 under pressure of the fan 30.

Thus, the generator 7 and the apparatus 8 installed on the kiln BK can selectively generate various kinds of atmosphere such as heating, reduction firing, oxidation firing and slow or rapid cooling atmospheres, and therefore, the kiln BK is capable of performing the variety of steps, such as preheating, oxidizing flame firing, neutral flame firing, reducing flame firing, slow cooling and rapid cooling steps as desired. Further, a suquential and/or timed control of the generator 7 and the apparatus 8 allows the kiln BK to successively conduct a series of desired firing steps under variable control throughout the whole firing process.

If desired, the generator 7 is equipped with auxiliary fluid introduction nozzles 53, 54 for introducing a secondary fluid into the first and second combustion areas 13, 14. Such a secondary fluid may be, e.g., an assist air or assist gas to aid the combustion reaction in the first and second combustion areas 13, 14, fluid for adjusting flow balance or pressure balance in the combustion system 10, or a specific fluid such as an inert gas. The auxiliary nozzles 53, 54 are connected to control valves 57, 58 by means of fluid pipes FA1, FA2, which are in communication with auxiliary fluid supply system FA including a secondary fluid source such as an assist air source.

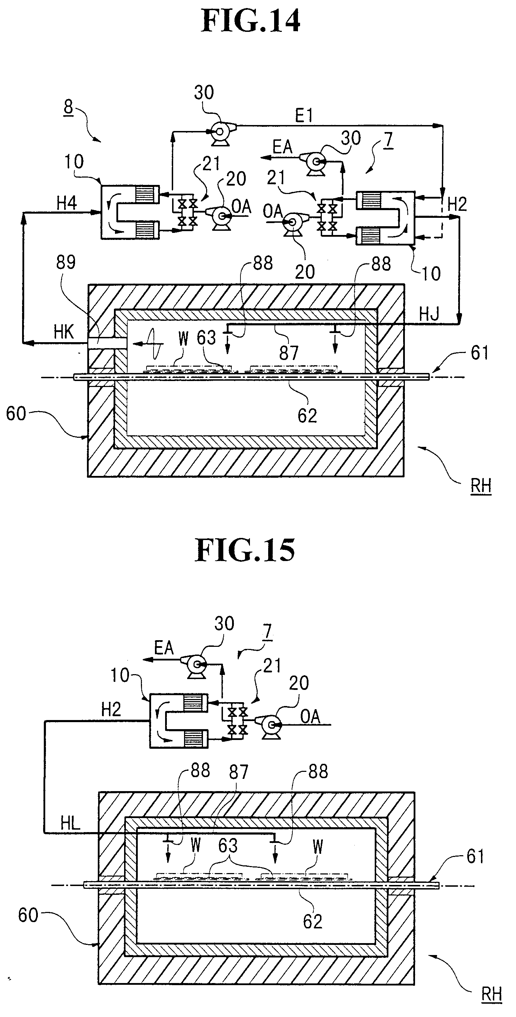

FIGS. 14, 15 and 16 are schematic vertical cross-sectional views of a roller hearth kiln RH in association with a third, forth and fifth embodiments of the present invention. In these embodiments, the generators 7 and the apparatus 8 are used for partially firing ceramic materials W.

In the third embodiment as shown in FIG. 14, a gas flow passage HJ of the generator 7 includes a regulated gas flow feed pipe 87, which has nozzles 88 for directing or blowing its delivery gas flow toward the tile materials W to be fired in the furnace area. The generator 7 is able to feed to the pipe 87 a high temperature gas flow of a specific condition, such as an air flow of a relatively high oxygen density, a reducing combustion gas flow, a weak oxidizing gas flow, a weak reducing gas flow or a neutral gas flow or the like, and blasts the gas flow onto a part of the material W by means of the respective nozzles 88.

The high temperature gas flow regulated by the generator 7 causes a specific local firing condition on the part of the material W, which differs from the firing atmosphere extending in the whole furnace area. This results in a development of unpredictable colors and patterns, such as shading, oxidized silver, spotted pattern or the like, on the tile materials W involved in a partial oxidizing firing or partial reducing firing. For instance, a high temperature oxidizing gas flow of the generator 7 is blown to the material W through the nozzles 88 while a reduction firing atmosphere is generally maintained in the whole furnace area. This allows unpredictable new colors or patters to be developed on the materials W.

A combustion flue gas of the furnace area is introduced into the combustion flue gas treatment apparatus 8 through a flue gas outlet port 89 and an flue gas passage HK, so that unburnt matters contained in the flue gas substantially completely burnt by an after-burning reaction in the apparatus 8. The exhaust gas of the apparatus 8 is at least partially introduced into the generator 7 through the exhaust passage E1 and the control valve means 50 by an induced draft fan 30.

In the fourth embodiment as shown in FIG. 15, a gas flow passage HL is connected to a regulated gas feed pipe 87, which extends in the furnace area of oxidation firing atmosphere. The pipe 87 delivers a high temperature reducing gas or weak reducing gas into the kiln RH through blowing nozzles 88, which blow the gas toward a part of the material W. The reducing gas blown or blasted from the nozzle 88 causes a partial reduction firing action on the material W, thereby performing a so-called low temperature reduction firing in the oxidation firing atmosphere. Thus, a desired color or pattern development due to the low temperature reduction firing, such as shading, oxidized silver or the like, appears at least partially on the materials W.

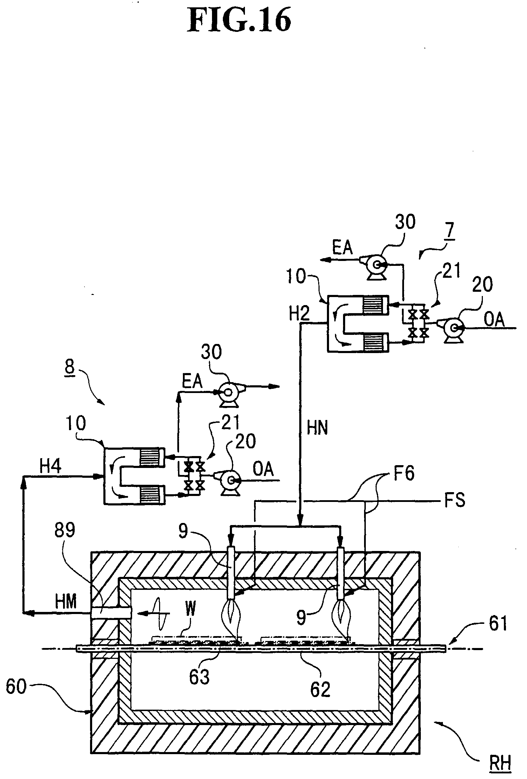

In the fifth embodiment as shown in FIG. 16, burners 9 on the top wall of the furnace body 60 direct their flames toward the materials W to perform a roasting firing in the furnace area. A high temperature air flow passage HN is connected to air intake passages of the burners 9 and a fuel supply system FS is connected through fuel feed pipes F6 with fuel injectors of the burners 9 to feed a hydrocarbon fuel thereto.

The passage HN is in communication with a splitting area of the a high temperature air flow generator 7, so that an high temperature air flow preheated to a temperature range above 800 °C~1,000 °C is fed to the burners 9 through the passage HN. The burner 9 causes a flame to be generated in the furnace area by the high temperature combustion air and the fuel, whereby the materials W transferred on the conveyor 61 are locally and partially roasted by impingement of the flame.

In this embodiment, the furnace area is maintained as being generally a weak reduction atmosphere. On the other hand, the amount of fuel through the pipe F6 and the amount of combustion air flow through the passage HN are adjusted to correspond to the air ratio less than 1.0, e.g., an order of 0.6 to 0.7. This results in that the burner 9 produces a reducing flame in the furnace area and that the material W is partially reduction-fired by a flame portion in a center part of the flame so as to be roasted. The combustion flue gas, which contains a relatively large amount of carbon monoxide and hydrogen produced in the furnace area, is introduced into the exhaust gas treatment apparatus 8 through an outlet port 89 and a combustion flue gas passage HM, in which the flue gas is substantially completely burnt by a re-burning action therein. The combustion exhaust gas of the apparatus 8 is exhausted through an exhaust gas flow passage EA and a fan 30.

While the present invention has thus been shown and described in connection with the particular preferred embodiments, it is apparent that certain changes and modifications, in addition to those mentioned above, may be made by those skilled in the art without departing from the basic features of the present invention. Accordingly, it should be noted that the present invention is in no way limited to the details of the described arrangements.

For example, the aforesaid gas generator 2 producing a reducing flame in the combustion area 13, 14 is able to produce a desired flame therein, such as a weak reducing flame, neutral flame or weak oxidizing flame, in accordance with an appropriate adjustment or variable control of the air ratio or a fuel supply rate. This makes it possible to provide a firing control apparatus for a kiln which can continuously feed a neutral flame combustion gas, a weak oxidizing flame combustion gas or the like into the kiln.

Further, the firing zone B of the roller hearth kiln RH as shown in FIG.1 can be equipped with the generators 1, 2 and regenerative burner systems each having a construction similar to the regenerative burner system 64 on the preheat zone A, whereby an arbitrary zonal control of the respective sections in the firing zone B can be carried out with use of the regenerative burner systems as well as the generators 1, 2.

Still further, although the kiln RH is arranged to perform the firing process with a continuous reduction firing on the materials W, the preheat zone and the reducing firing zone may be a continuous oxidation firing zone, and a so-called low temperature reducing zone at a temperature ranging from 1,000°C ~ 1,100 °C may be substituted for the re-oxidizing zone. In such a firing process, a core portion of the material W fired in the oxidation firing zone develops a yellow or red color, whilst the surface of the material presents a black color or shading at least partially by a reduction atmosphere in the low temperature reducing zone.

Further, the term "honeycomb" is used to generally mean structures in which a plurality of passages or channels are arranged in a honeycomb form. However, the honeycomb structure is not limited to that shown in Fig. 10, but honeycomb structures having various cross-sections, e.g., circular, triangular, rectangular, hexagonal cross-sections or the like, or a honeycomb structure constituted by an assembly of tubes, plates or the like may be adopted.

## Claims

1. An apparatus for controlling a temperature and/or firing atmosphere in a kiln, comprising first and second heat-exchangers (11, 12), first and second combustion areas (13, 14), communication means for allowing the first and second combustion areas (13, 14) to be in communication with each other, and changeover means (21) for selectively switching a flow passage of a low temperature fluid and a flow passage of a combustion gas, the first heat-exchanger (11) and the first combustion area (13) being arranged in series and the second heat-exchanger (12) and the second combustion area (14) being arranged in series:

wherein said changeover means (21) is adapted to be alternately switched to first and second positions, in the first position the low temperature fluid flow being introduced through the first heat-exchanger (11) into the first combustion area (13) and the combustion exhaust gas produced in said second combustion area (14) being exhausted through said second heat-exchanger (12), whereas in the second position the low temperature fluid flow being introduced through said second heat-exchanger (12) into the second combustion area (14) and the combustion exhaust gas produced in said first combustion area (13) being exhausted through said first heat-exchanger (11);

wherein the communication means (21) is connected with a communication passage through which the communication means (21) is adapted to be in communication with the kiln;

wherein a high temperature fluid flow heated by the first heat-exchanger (11) is introduced through said communication means (21) into the second combustion area (14) in said first position so that the high temperature fluid undergoes a combustion reaction therein, whereas a high temperature fluid flow heated by the second heat-exchanger (12) is introduced through said communication means (21) into the first combustion area (13) in said second position so that the high temperature fluid undergoes a combustion reaction therein; and

wherein each of the first and second heat-exchangers (11, 12) is provided with a regenerator, which allows said combustion exhaust gas and said low temperature fluid flow to alternately pass therethrough, so that the regenerator accumulates the heat of the combustion exhaust gas in a heat transferable contact therewith and transmits the accumulated heat to the low temperature fluid so as to heat it.

2. The apparatus according to claim 1, wherein said communication means has a splitting area (15) for dividing said high temperature fluid flow (H) into first and second streams (H1, H2), so that the first stream (H1) is introduced into the second combustion area (14) when the changeover means (21) is in said first position, and on the other hand, it is introduced into the first combustion area (13) when the changeover means (21) is in said second position, each of said combustion areas (13, 14) provided with fuel supply means (FS) for feeding a combustion fuel to said first stream (H1); and

wherein the high temperature fluid flow of said second stream (H2) is introduced into said communication passage to be delivered to a predetermined area in the kiln so as to control the temperature therein.

3. The apparatus according to claim 1 or 2, wherein each of said first and second combustion area (13, 14) is provided with fuel supply means (FS) for feeding a fuel to said high temperature fluid flow, which is heated through the heat-exchanger, and the fuel and the heated fluid flow generate a reducing or neutral flame in the combustion area, whereby said heated fluid flow is reformed to a reducing or neutral combustion gas flow at a high temperature;

wherein said communication means has a splitting area (15) for dividing said gas flow into first and second streams (H1, H2), so that the first stream (H1) is introduced into the second combustion area (14) to take a re-burning reaction therein when the changeover means (21) is in said first position, and on the other hand, it is introduced into the first combustion area (13) to take a re-burning reaction therein when the changeover means (21) is in said second position; and

wherein the reducing or neutral gas flow of said second stream (H2) at high temperature is introduced into said communication passage to be fed to a predetermined area in the kiln so as to control the firing atmosphere therein.

4. The apparatus according to anyone of claims 1 to 3, wherein said communication means has a junction area, which receives a combustion flue gas flow from the kiln through said communication passage and which allows the gas flow to join said high temperature fluid flow; and

wherein the mixture flow of said combustion flue gas and high temperature fluid is introduced into the second combustion area (14) to take a re-burning reaction therein when the changeover means (21) is in said first position, so that unburnt matters contained in said combustion flue gas are burnt in the second combustion area (14), whereas said mixture flow is introduced into the first combustion area (13) to take a re-burning reaction therein when the changeover means (21) is in said second position, so that said unburnt matters are burnt in the first combustion area (13).

5. An apparatus for controlling a furnace temperature in a kiln, comprising first and second heat-exchangers (11, 12) for heating a low temperature air flow to a high temperature air flow, a splitting area (15) for dividing the high temperature air flow (H) into first and second streams (H1, H2), a first combustion area (13) located between the first heat-exchanger (11) and the splitting area (15), a second combustion area (14) located between the second heat-exchanger (12) and the splitting area (15), changeover means (21) for selectively switching a flow passage of the low temperature air flow to be introduced into the heat-exchanger and that of a combustion exhaust gas produced in the combustion area, and fuel supply means (FS) for feeding a fuel to the respective combustion areas;

wherein said changeover means (21) is adapted to be alternately switched to first and second positions, in the first position the low temperature air flow being introduced through the first heat-exchanger (11) into the first combustion area (13) and the combustion exhaust gas produced in said second combustion area (14) being passed through said second heat-exchanger (12), whereas in the second position the low temperature air flow being introduced through said second heat-exchanger (12) into the second combustion area (14) and the combustion exhaust gas produced in said first combustion area (13) being passed through said first heat-exchanger (11);

wherein said second stream (H2) is fed from the splitting area (15) to a predetermined area in the kiln so as to act as a temperature regulated hot air flow, and said first stream (H1) is introduced into the second combustion area (14) in the first position of the changeover means (21) to take a combustion reaction with the fuel of the fuel supply means (FS), whereas it is introduced into the first combustion area (13) in the second position thereof to take a combustion reaction with said fuel; and

wherein each of the first and second heat-exchangers (11, 12) is provided with a regenerator, which accumulates a heat of combustion flue gas of said combustion area in a heat transferable contact therewith and transmits the accumulated heat to the low temperature air flow in a heat transferable contact therewith.

6. An apparatus for controlling a firing atmosphere in a kiln, comprising first and second heat-exchangers (11, 12) for heating a low temperature air flow to a high temperature fluid flow, a splitting area (15) for dividing the high temperature fluid flow (H) into first and second streams (H1, H2), a first combustion area (13) located between the first heat-exchanger (11) and the splitting area (15), a second combustion area (14) located between the second heat-exchanger (12) and the splitting area (15), changeover means (21) for selectively switching a flow passage of the low temperature air to be introduced into the heat-exchanger and that of a combustion exhaust gas flow produced in the combustion area, and fuel supply means (FS) for feeding a fuel to the combustion area;

wherein said changeover means (21) is adapted to be alternately switched to first and second positions, in the first position the low temperature air flow being introduced through the first heat-exchanger (11) into the first combustion area (13) and the combustion exhaust gas produced in said second combustion area (14) being passed through said second heat-exchanger (12), whereas in the second position the low temperature air flow being introduced through said second heat-exchanger (12) into the second combustion area (14) and the combustion exhaust gas produced in said first combustion area being passed through said first heat exchanger (11);

wherein said fuel supply means (FS) feeds the fuel to the heated air flow so as to generate a reducing or neutral flame in said combustion area with a primary combustion reaction of the high temperature air, said second stream (H2) is fed from the splitting area (15) to a predetermined area in the kiln so as to act as a high temperature reducing or neutral firing gas flow at a high temperature which is regulated in an oxygen density and/or a carbon monoxide density, and said first stream (H1) is introduced into the second combustion area (14) in the first position of the changeover means (21) to take a re-burning reaction therein, and on the other hand, it is introduced into the first combustion area (13) in the second position thereof to take a re-burning reaction therein; and

wherein each of the first and second heat-exchangers (11, 12) is provided with a regenerator, which accumulates the heat of combustion exhaust gas of said combustion area in a heat transferable contact therewith and transmits the accumulated heat to the low temperature air flow in a heat transferable contact therewith.

7. An apparatus for controlling a combustion flue gas of a kiln containing an unburnt matter, comprising first and second heat-exchangers (11, 12) for heating a low temperature air flow to a high temperature air flow, a conjunction area for joining the heated air flow with said combustion flue gas, a first combustion area (13) located between the first heat-exchanger (11) and the conjunction area, a second combustion area (14) located between the second heat-exchanger (12) and the conjunction area, and changeover means (21) for selectively switching a flow passage of the low temperature air to be introduced into the heat-exchanger and that of a combustion exhaust gas of the combustion area;

wherein said changeover means (21) is adapted to be alternately switched to first and second positions, in the first position the low temperature air flow being introduced through the first heat-exchanger (11) into the first combustion area (13) and the combustion exhaust gas produced in said second combustion area (14) being passed through said second heat-exchanger (12), whereas in the second position the low temperature air flow being introduced through said second heat-exchanger (12) into the second combustion area (14) and the combustion exhaust gas produced in said first combustion area (13) being passed through said first heat-exchanger (11);

wherein, in the first position, said combustion flue gas joining the high temperature air flow is introduced into said second combustion area (14) to take a re-burning reaction therein, whereas in the second position, said combustion flue gas joining the high temperature air flow being introduced into said first combustion area (13) to take a re-burning reaction therein; and

wherein each of the first and second heat-exchangers (11, 12) is provided with a regenerator, which accumulates the heat of the combustion exhaust gas of said combustion area in a heat transferable contact therewith and transmits the accumulated heat to the low temperature air flow in a heat transferable contact therewith.

8. A method for controlling a temperature and/or firing atmosphere in a kiln, comprising the first and second heating processes;

the first heating process including steps of introducing a low temperature fluid flow through a regenerator of a first heat-exchanger (11) at a high temperature so as to heat the low temperature fluid flow in a heat transferable contact with the regenerator, introducing the heated fluid flow at

a high temperature through communication means into the second combustion area (14) so as to undergo a combustion reaction therein, and exhausting a combustion exhaust gas produced in the second combustion area (14) through a regenerator of a second heat-exchanger (12) so that a sensible heat possessed by the combustion exhaust gas is accumulated in the regenerator in a heat transferable contact therebetween;

the second heating process including steps of introducing a low temperature fluid flow through the regenerator of the second heat-exchanger (12) at a high temperature so as to heat the low temperature fluid flow in a heat transferable contact with the regenerator, introducing the heated fluid flow at a high temperature through the communication means into the first combustion area (13) so as to undergo a combustion reaction therein, and exhausting a combustion exhaust gas produced in the first combustion area (13) through the regenerator of the first heat-exchanger (11) so that a sensible heat possessed by the combustion exhaust gas is accumulated in the regenerator in a heat transferable contact therebetween; and

wherein said communication means is in communication with a predetermined area of the kiln through a communication passage, and said first and second processes are alternately performed in a predetermined time interval so as to continuously heat said low temperature fluid flow.

9. The method according to claim 8, wherein said heated fluid flow is divided into first and second streams (H1, H2) in said first process so that the second stream (H2) is delivered to a predetermined zone of the kiln and the first stream (H1) is introduced into said second combustion area (14); and

wherein said heated fluid flow is divided into the first and second streams (H1, H2) in said second process so that the second stream (H2) is delivered to said zone of the kiln and the first stream (H1) is introduced into said first combustion area (13).

10. The method according to claim 8 or 9, wherein a reducing or neutral flame is produced in said first combustion area (13) with a fuel fed thereinto in said first process, a combustion gas flow of a reduction or neutral atmosphere produced in the first combustion area (13) is divided into first and second streams (H1, H2) so that the second stream (H2) is delivered to a predetermined zone of the kiln and the first stream (H1) is introduced into said second combustion area (14) to take a re-burning reaction therein, and the re-burnt exhaust gas produced in the second combustion area (14) is exhausted through the regenerator of the second heat-exchanger (12); and

wherein a reducing or neutral flame is produced in said second combustion area (14) with the fuel fed thereinto in said second process, a combustion gas flow of a reduction or neutral atmosphere produced in the second combustion area (14) is divided into first and second streams (H1, H2) so that the second stream (H2) is delivered to said zone of the kiln and the first stream (H1) is introduced into said first combustion area (13) to take a re-burning reaction therein, and the re-burnt exhaust gas produced in the first combustion area (13) is exhausted through the regenerator of the first heat-exchanger (11).

11. The method according to anyone of claims 8 to 10, wherein a combustion flue gas of the kiln is joined with said high temperature fluid flow heated by said first heat-exchanger (11) in said first process, the mixed flow of the flue gas and the high temperature fluid is introduced into said second combustion area (14) so as to undergo a combustion reaction of unburnt matters contained in said flue gas, thereby urging a substantially complete combustion of the unburned matters, and a combustion exhaust gas produced in the second combustion area (14) is introduced into the second heat-exchanger (12) and exhausted therethrough; and

wherein said combustion flue gas of the kiln is joined with said high temperature fluid flow heated by said second heat-exchanger (12) in said second process, the mixed flow of the flue gas and the high temperature fluid is introduced into said first combustion area (13) so as to undergo a combustion reaction of the unburned matters in said flue gas, thereby urging a substantially complete combustion of the unburned matters, and a combustion exhaust gas produced in the first combustion area (13) is introduced into the first heat-exchanger (11) and exhausted therethrough.

# FIG.1

# FIG.2

(A)

(B)

# FIG.3

**(A)**

**(B)**

# FIG.4

## (A)

## (B)

# FIG.5

**(A)**

**(B)**

# FIG.6

## (A)

## (B)

# FIG.7

## (A)

## (B)

# FIG.8

## (A)

## (B)

# FIG.9

## (A)

## (B)

# FIG.10

(B)

(A)

# FIG.11

# FIG.12

## (A)

## (B)

# FIG.13

## (A)

## (B)

# FIG.14

# FIG.15

# FIG.16